(19) Europäisches Patentamt
European Patent Office
Office européen des brevets

(11) Veröffentlichungsnummer: **0 001 840**
**A2**

# (12) EUROPÄISCHE PATENTANMELDUNG

(21) Anmeldenummer: **78101303.2**

(22) Anmeldetag: **03.11.78**

(51) Int. Cl.$^2$: **C 08 L 101/00**
C 08 K 5/00

(30) Priorität: **08.11.77 CH 13587/77**

(43) Veröffentlichungstag der Anmeldung:
**16.05.79 Patentblatt 79/10**

(84) Benannte Vertragsstaaten:
**BE CH DE FR GB NL SE**

(71) Anmelder: **CIBA-GEIGY AG**
**Patentabteilung Postfach**
**CH-4002 Basel(CH)**

(72) Erfinder: **Moser, Paul, Dr.**
**Leimgrubenweg 58**
**CH-4125 Riehen(CH)**

(72) Erfinder: **Rody, Jean, Dr.**
**Bäumlihofstrasse 148**
**CH-4058 Basel(CH)**

(72) Erfinder: **Karrer, Friedrich, Dr.**
**Rebbergstrasse 5**
**CH-4800 Zofingen(CH)**

(54) **Stabilisatorgemische, Verfahren zum Stabilisieren von Kunststoffen gegen Licht mit diesen Gemischen und so stabilisierte Kunststoffe.**

(57) Gemische von einem Polymeren, das in beliebiger Form chemisch gebundene Polyalkylpiperidine enthält und einer Metallverbindung $MeL_w$, worin Me ein 2- oder 3-wertiges Metallion oder ein 2-wertiges Oxometallion oder ein 2-wertiges Dialkylzinn- ion ist, L das einwertige Anion einer Carbonsäure, einer Phosphinsäure, eines Phosphonsäuremonoesters oder eines Enols darstellt und w 2 oder 3 ist, stellen wirkungsvolle Lichtschutzmittel für Kunststoffe dar. Die Piperidin-haltigen Polymeren können zum Beispiel Polyester, Polyamide, Polyamine, Polyaminotriazine oder Poly-(meth)-acrylate sein. Beispiele für Metallverbindungen $MeL_w$ sind Nickel-oenanthat oder Nickel-acetylacetonat. Zu stabilisierende Kunststoffe sind insbesondere die Polyolefine.

EP 0 001 840 A2

Croydon Printing Company Ltd.

0001840



3-11432/S/+

BEZEICHNUNG GEÄNDERT
siehe Titelseite

Neue Lichtschutzmittel für Kunststoffe

Die Erfindung betrifft neue Gemische aus polymeren Polyalkylpiperidinverbindungen und Metallverbindungen, die zum Stabilisieren von Kunststoffen, vor allem gegen Lichtabbau, geeignet sind. Es ist bekannt, dass Derivate von Polyalkylpiperidinen hervorragende Lichtschutzmittel für Kunststoffe sind. Vor allem zur Stabilisierung von Polyolefinen werden solche sterisch gehinderte Piperidine in zunehmendem Ausmass verwendet. Beispiele für solche Piperidinverbindungen sind die in der DT-OS 2 204 659 beschriebenen Ester von 4-Hydroxy-polyalkylpiperidinen oder die in der DT-OS 2 040 975 beschriebenen N-Acylderivate von 4-Amino-polyalkylpiperidinen.

Es ist auch bereits aus der DT-OS 2 625 967 bekannt, dass die Wirksamkeit von Polyalkylpiperidin-Stabilisatoren durch Komplexbildung mit zwei- oder dreiwertigen Metallionen gesteigert werden kann. Hierzu setzt man eine Polyalkylpiperidinverbindung mit einer Metallverbindung

der Formel $MeL_w$ um, wobei Me ein Metall der Wertigkeit w ist und L ein einwertiges Anion einer aliphatischen Carbonsäure, einer Aminophosphon- oder -phosphinsäure oder eines Enols ist. Ein weiterer Vorteil der Komplexierung der Piperidin-Stabilisatoren gemäss DT-OS 2 625 967 sind eine erhöhte Extraktionsstabilität und eine verlängerte Schutzwirkung. Diese beiden Eigenschaften sind jedoch für gewisse Verwendungszwecke noch ungenügend. Insbesondere wenn der Kunststoff in dünnen Schichten vorliegt, wie in Lacken, Filmen und Fasern, wird eine noch höhere Extraktions- und Migrationsechtheit erfordert.

Es wurde nun gefunden, dass eine weitere Steigerung der Extraktions- und Migrationsechtheit erzielt werden kann, wenn man polymere Polyalkylpiperidinverbindungen mit bestimmten Metallverbindungen mischt.

Gegenstand der Erfindung sind daher Gemische von

a) einem Polymeren, das in beliebiger Form chemisch gebundene Polyalkylpiperidinreste enthält, und

b) einer Metallverbindung der Formel $MeL_w$, worin Me ein zwei- oder dreiwertiges Metallion oder ein zweiwertiges Oxometallion oder ein zweiwertiges Dialkylzinn-ion ist, L das einwertige Anion einer Carbonsäure, einer Phosphinsäure oder eines Phosphonsäuremonoesters, die durch Hydroxyl, Aminogruppen oder Polyalkylpiperidingruppen substituiert sein können, oder ein Enolation der Formel VI darstellt,

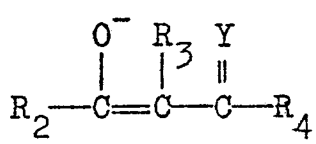

VI

BAD ORIGINAL

worin Y Oxo oder gegebenenfalls substituiertes Imino ist, $R_2$ Alkyl, Alkenyl, Cycloalkyl, Aralkyl, Aryl oder substituiertes Aryl ist, $R_3$ Wasserstoff, Alkyl, Alkenyl, Cycloalkyl, Aralkyl, Aryl, Alkoxycarbonyl oder Alkoxycarbonylalkyl ist, oder $R_2$ und $R_3$ zusammen gegebenenfalls substituiertes 1,4-Buta-1,3-dienylen oder 1,4-Butylen ist, oder $R_2$ und $R_3$ zusammen eine Gruppe der Formel VIa darstellen,

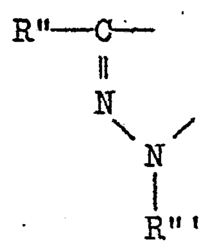

VIa

worin R'' Alkyl, Phenyl oder substituiertes Phenyl und R''' Phenyl oder Alkylphenyl darstellen, $R_4$ Alkyl, Alkenyl, Cycloalkyl, Aryl, Aralkyl, Alkoxy, eine primäre, sekundäre oder tertiäre Aminogruppe oder eine Gruppe -O-Pi oder $-NR_5-Pi$ ist, worin $R_5$ Wasserstoff, Alkyl, Cycloalkyl oder Aralkyl und Pi einen Polyalkylpiperidinrest darstellt, und worin $R_2$, $R_3$ oder $R_4$ auch Alkyl, das durch einen Rest der Formeln -O-Pi, $-NR_5-Pi$, -COO-Pi oder $-CONR_5-Pi$ substituiert ist, sein können und w 2 oder 3 ist, insbesondere solcher Gemische aus a) und b), in denen die Komponente a) aus einem Polymeren besteht, dessen wiederkehrende Struktureinheit mindestens einen Polyalkylpiperidinrest der Formel I oder II

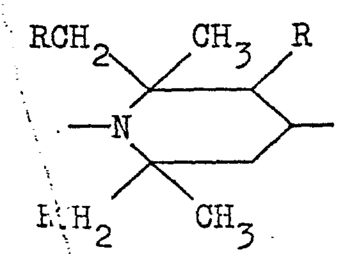

I

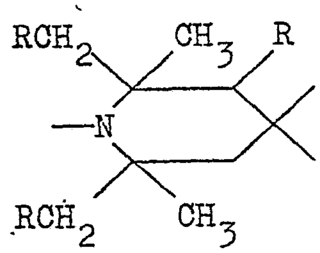

II

BAD ORIGINAL

enthält oder durch eine Polyalkylpiperidin-Seitengruppe der Formel III, IV oder V

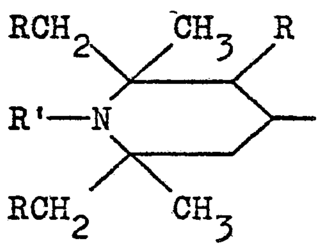

III

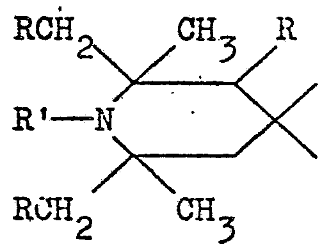

IV

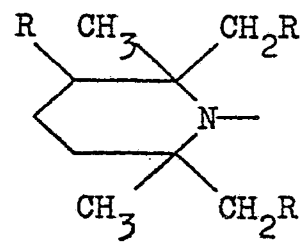

V

substituiert ist, worin R Wasserstoff oder $C_1$-$C_5$ Alkyl und R' Wasserstoff, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl oder $C_3$-$C_5$ Alkenoyl bedeutet, oder einem Mischpolymeren davon und solcher Gemische, in denen die Komponente b) eine Metallverbindung der Formel $MeL_w$ darstellt, worin das Kation Me eines aus der Reihe $Mg^{2+}$, $Ca^{2+}$, $Sr^{2+}$, $Ba^{2+}$, $Zn^{2+}$, $Cd^{2+}$, $Sn^{2+}$, $Al^{3+}$, $Cr^{3+}$, $Ni^{2+}$, $Co^{2+}$, $Mn^{2+}$, $VO^{2+}$, $MoO^{2+}$ oder $(C_1$-$C_{12}$ Alkyl$)_2Sn^{2+}$ ist und worin der Ligand L das einwertige Anion einer aliphatischen, cycloaliphatischen, araliphatischen oder aromatischen Carbonsäure, Phosphinsäure oder eines Phosphonsäure-monoesters mit jeweils 2-22 C-Atomen darstellt, die unsubstituiert oder durch -OH, $-NH_2$, $-NHR_5$, $-NR_5R_6$ oder einen Rest der Formel -Pip, -O-Pip, $-NR_5$-Pip, -COOPip oder $-CONR_5$-Pip substituiert sind, wobei $R_5$ Wasserstoff, $C_1$-$C_{12}$ Alkyl, Cyclohexyl oder Benzyl und $R_6$ $C_1$-$C_{12}$ Alkyl, Cyclohexyl, Benzyl, $C_6$-$C_{10}$ Aryl oder $C_7$-$C_{12}$ Alkylphenyl bedeuten, oder wobei $R_5$ und $R_6$ zusammen 1,4-Butylen, 1,5-Pentylen oder 3-Oxa-1,5-pentylen darstellen, und wobei Pip einen Rest der Formeln III oder Va darstellt,

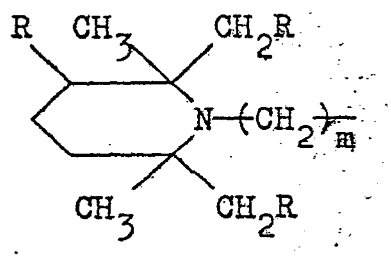

Va

worin m 1, 2 oder 3 ist, oder L ein Enolat-ion der Formel VI ist,

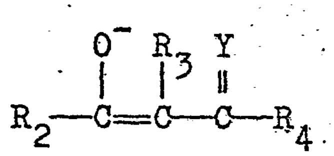

VI

worin Y Oxo oder eine Iminogruppe =NH oder $=NR_6$ darstellt, $R_2$ $C_1$-$C_{12}$ Alkyl, $C_3$-$C_6$ Alkenyl, $C_5$-$C_{12}$ Cycloalkyl, $C_7$-$C_{12}$ Aralkyl, $C_6$-$C_{10}$ Aryl oder durch $C_1$-$C_4$ Alkyl, Hydroxyl oder Halogen substituiertes Phenyl bedeutet, $R_3$ Wasserstoff, $C_1$-$C_{12}$ Alkyl, $C_3$-$C_6$ Alkenyl, $C_5$-$C_{12}$ Cycloalkyl, $C_7$-$C_{12}$ Aralkyl, Phenyl, $C_2$-$C_{13}$ Alkoxycarbonyl oder $C_3$-$C_{14}$ Alkoxycarbonylmethyl bedeutet, oder $R_2$ und $R_3$ zusammen einen unsubstituierten oder durch $C_1$-$C_4$ Alkyl oder Halogen substituierten 1,4-Buta-1,3-dienylen- oder 1,4-Butylenrest darstellen oder $R_2$ und $R_3$ zusammen einen Rest der Formel VIa darstellen,

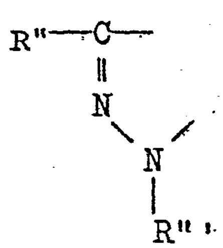

VIa

worin R'' $C_1$-$C_6$ Alkyl, Phenyl oder durch $C_1$-$C_8$ Alkyl und/ oder Hydroxyl substituiertes Phenyl und R''' Phenyl oder durch $C_1$-$C_4$ Alkyl substituiertes Phenyl bedeuten, und $R_4$ $C_1$-$C_{12}$ Alkyl, $C_3$-$C_6$ Alkenyl, $C_5$-$C_{12}$ Cycloalkyl, $C_7$-$C_{12}$ Aralkyl, Phenyl, $C_1$-$C_{12}$ Alkoxy, oder eine Gruppe der Formeln $-NH_2$, $-NHR_6$, $-NR_5R_6$, -O-Pip, $-NR_5$-Pip bedeutet und worin $R_2$, $R_3$ oder $R_4$ auch $C_1$-$C_4$ Alkyl, das durch einen Rest der Formel -O-Pip, $-NR_5$-Pip, -COO-Pip oder $-CONR_5$-Pip substituiert ist, sein können und w 2 oder 3 ist.

Das Gewichtsverhältnis von a) zu b) beträgt dabei 99,9 zu 0,1 bis 10 zu 90, vorzugsweise 95 zu 5 bis 60 zu 40.

Gemäss der Erfindung enthält also die Komponente a) in jedem Fall Polyalkylpiperidingruppen, während die Komponente b) solche Gruppen enthalten kann oder nicht.

Die Polymeren der Komponente a) sind solche, wie sie durch Polykondensation, Polyaddition oder Polymerisation geeigneter Derivate von Polyalkylpiperidinen erhältlich sind. Beispiele hierfür sind Polyester, Polyamide, Polyurethane, Polyharnstoffe, Polycarbonate, Polyäther, Polyamine, Polysulfide, Polysulfone, Polyimide, Polysulfonate, Polyphosphate, Polyphosphonate, Polysilylester, Polysiloxane, Polyhydrazide, Polyhydrazone, Polybenzimidazole, Triazinhaltige Polymere, Polymerisate von Styrol. von Estern, Amiden oder Nitrilen ungesättigter Carbonsäuren, von Viryl- oder Allylestern, von Vinylpyrrolidon oder Polymerisate von Maleinimiden, die Piperidinreste der Formel I bis V enthalten.

Die polymeren Piperidinverbindungen der Komponente a) können auch Mischpolymere sein, die zwei oder mehr verschiedene Polymertypen in sich vereinigen, beispielsweise Polyester-amide, Polyäther-ester, Polyäther-amine, Polyäther-urethane oder Polyäther-sulfone. Es kann sich auch um Mischpolymere aus demselben Polymertyp handeln, beispielsweise ein Polyester aus zwei verschiedenen Diolen oder aus zwei verschiedenen Dicarbonsäuren. Auch in diesen Mischpolymeren ist in jeder wiederkehrenden Struktureinheit mindestens ein Piperidinrest enthalten. Schliesslich kann es sich auch um Mischpolymere handeln, bei dem nur eine Komponente einen Polyalkylpiperidinrest enthält, beispielsweise das Copolymerisat eines piperidinhaltigen Acrylates mit einem piperidinfreien Acrylat. In diesem Falle soll jedoch das Molverhältnis der piperidinhaltigen zur piperidinfreien Komponente mindestens 1:10 betragen.

Soweit diese Polymeren einen niedrigen Polymerisationsgrad besitzen, nennt man sie auch Oligomere. Solche oligomeren Piperidinverbindungen sind für die vorliegende Erfindung als Komponente a) sehr gut geeignet. Bevorzugt als Komponente a) sind Polyester, Polyäther, Polyharnstoffe, Polyamide, Polyurethane, Polyamine oder Polyaminotriazine, die Polyalkylpiperidinreste der Formeln I bis V enthalten und Poly(meth)acrylate oder Poly(meth)acrylamide, die Polyalkylpiperidinreste der Formeln III bis V enthalten.

Der in den Formeln I bis V enthaltene Substituent R kann $C_1$-$C_5$ Alkyl sein wie z.B. Methyl, Aethyl, Propyl, Butyl oder Pentyl. Bevorzugt ist R Wasserstoff oder Methyl, besonders bevorzugt Wasserstoff. Wenn R Wasserstoff ist, so handelt es sich bei den Polyalkylpiperidinresten

I-V um Reste des 2,2,6,6-Tetramethylpiperidins.

R' kann $C_1$-$C_{18}$ Alkyl bedeuten, beispielsweise Methyl, Aethyl, Propyl, Butyl, Isopentyl, 2-Aethylhexyl, Decyl, Dodecyl oder Octadecyl. R' kann Alkenyl mit 3-8 C-Atomen bedeuten, beispielsweise Allyl, Methallyl oder Dimethallyl, oder es kann $C_3$-$C_8$ Alkinyl bedeuten wie z.B. Propargyl, But-4-inyl oder Hept-4-inyl. R' als $C_7$-$C_{12}$ Aralkyl kann z.B. Benzyl, Phenyläthyl oder Phenylpropyl sein. R' als $C_1$-$C_8$ Alkanoyl kann z.B. Formyl, Acetyl, Propionyl, Butyroyl, Valeroyl oder Capronyl sein und als $C_3$-$C_5$ Alkenoyl kann R' z.B. Acryloyl, Methacryloyl oder Vinylacetyl sein. Bevorzugt ist R' Wasserstoff oder Methyl.

Die Komponente b) stellt eine Metallverbindung $MeL_w$ dar, in der Me ein zwei- oder dreiwertiges Metallion oder Oxometallion ist, beispielsweise das zweiwertige Kation von Mg, Ca, Sr, Ba, Zn, Sn, Cd, Ni, Co, Mn, VO, $MoO_2$ oder das dreiwertige Kation von Al oder Cr oder ein zweiwertiges Dialkylzinn-Kation, wie z.B. das zweiwertige Kation von Diäthylzinn, Dibutylzinn, Dihexylzinn, Dioctylzinn oder Di-dodecyl-zinn. Bevorzugt ist Me ein Kation aus der Reihe $Ni^{2+}$, $Co^{2+}$, $Zn^{2+}$, $Mg^{2+}$, $Ca^{2+}$ und $Al^{3+}$, besonders bevorzugt das zweiwertige Kation von Nickel oder Kobalt.

L kann das Anion einer Carbonsäure sein, die unsubstituiert sein kann wie z.B. Essig-, Propion-, Butter-, Capron-, Capryl-, 2-Aethylcapron-, Laurin-, Stearin-, Eikosan-, Benzoe-, Naphthoe-, Toluyl-, Phenylessig-, Phenylbutter-, t-Butylbenzoe-, Oel- oder Zimtsäure, oder die durch Hydroxyl substituiert sein kann wie z.B. Milch-, Hydracryl-, Salicyl-, Tropa-, Ricinol-, Hydroxystearin- oder 3,5-Di-tert.butyl-4-hydroxybenzoesäure, oder

durch eine Aminogruppe substituiert sein kann wie z.B. Glycin, Dibutylaminoessigsäure, Alanin, β-Dimethylamino-propionsäure, Valin, Isoleucin, p-Dibutylamino-benzoesäure oder Cyclohexylamino-essigsäure, oder durch einen Polyalkylpiperidinrest substituiert sein kann wie z.B. 2,2,6,6-Tetramethylpiperidin-4-yl-essigsäure, 1,2,2,6,6-Pentamethylpiperidin-4-oxy-propionsäure, 4-Amino-2,2,6,6-tetramethylpiperidin-4-carbonsäure oder 2,2,6,6-Tetramethylpiperidin-4-aminoessigsäure. Die Carbonsäure kann auch ein Gemisch von natürlichen oder technischen Carbonsäuren sein, wie z.B. Kokosfettsäure, Talgfettsäure oder Napthensäure. Bevorzugt ist L das Anion einer aliphatischen Carbonsäure. L kann weiterhin das Anion einer Phosphinsäure oder eines Phosphonsäure-monoesters sein, die unsubstituiert sein können wie z.B. Dihexylphosphinsäure, Butyl-phenylphos-phinsäure, Dicyclohexylphosphinsäure, Hexylphosphonsäure-monoäthylester, Octadecylphosphonsäure-monomethylester oder Benzylphosphonsäure-monobutylester, oder die durch Hydroxylgruppen substituiert sein können wie z.B. 2-Hydroxy-2-phenyl-äthylphosphonsäure-monoäthylester, α-Hydroxybenzyl-phenylphosphinsäure oder 4-Hydroxy-3,5-di-tert.butyl-benzylphosphonsäure-monobutylester, oder die durch Aminogruppen substituiert sein können wie z.B. α-Aminobenzylphosphonsäure-monomethylester, Diäthylamino-methylphosphonsäure-monohexylester, α-Butylaminobenzyl-phosphonsäure-monomethylester, α-Morpholinomethyl-phos-phonsäure-monobutylester, α-Dibutylamino-isopropylphos-phonsäure-monoäthylester, α-Cyclohexylamino-benzylphos-phonsäure-monomethylester, α-Anilino-benzyl-phenylphos-phinsäure, Diäthylaminomethyl-phenyl-phosphinsäure oder die durch eine Polyalkylpiperidingruppe substituiert sein können wie z.B. 1-(1,2,2,6,6-Pentamethylpiperidinyl-4-amino)-heptylphosphonsäure-monoäthylester oder 2-(2,2,6,6-

Tetramethylpiperidinyl-4-amino)-äthylphosphonsäure-mono-äthylester. Unter den Phosphonyl-liganden sind die Anionen von α- oder β-Aminophosphonsäuremonoalkylestern bevorzugt.

Der Ligand L kann ferner ein Enolat-ion der Formel VI sein. Es handelt sich dabei um ein Anion eines β-Diketons, β-Ketoesters, β-Ketoamides, einer o-Hydroxyphenylcarbonylverbindung, eines o-Hydroxyphenyl-carbonsäureesters oder -amides oder ein Mono-imino-derivat eines solchen Anions.

$R_2$, $R_3$ und $R_4$ in Formel VI können dabei Alkyl sein, beispielsweise Methyl, Aethyl, Isopropyl, Butyl, Isoamyl, Hexyl, 2-Aethylhexyl, tert.Octyl, Isodecyl oder Dodecyl, sie können Alkenyl sein, z.B. Allyl, Methallyl oder Dimethallyl, sie können Cycloalkyl sein, z.B. Cyclopentyl, Cyclohexyl, Cyclooctyl oder Cyclododecyl, sie können Aralkyl sein, z.B. Benzyl oder Phenyläthyl. $R_2$ kann auch Aryl sein wie Phenyl oder Naphthyl oder durch Alkyl, Hydroxyl und/oder Halogen substituiertes Phenyl, beispielsweise Chlorphenyl, Bromphenyl, Dichlorphenyl, Tolyl, p-tert.Butylphenyl, 4-Hydroxyphenyl oder 3,5-Di-tert.butyl-4-hydroxyphenyl. $R_3$ kann auch Alkoxycarbonyl oder Alkoxycarbonylmethyl sein wie z.B. $-COOCH_3$, $-COOC_2H_5$ oder $-CH_2COOC_4H_9$. $R_2$ und $R_3$ können zusammen einen unsubstituierten oder durch Halogen, Niederalkyl oder Niederalkoxy substituierten 1,4-Butadienylen- oder 1,4-Butylenrest darstellen, wodurch sie zusammen mit den beiden C-Atomen, an die sie gebunden sind, einen Benzolring oder Cyclohexenring bilden.

BAD ORIGINAL

$R_4$ kann auch Alkoxy sein wie z.B. Methoxy, Aethoxy, Isopropoxy, Butoxy, Hexyloxy, Octyloxy oder Dodecyloxy.

$R_5$ und $R_6$ können Alkyl sein, z.B. Methyl, Aethyl, Isopropyl, Butyl, Hexyl, tert.Octyl oder Dodecyl, sie können Cycloalkyl sein, vorzugsweise Cyclohexyl, oder sie können Aralkyl sein, vorzugsweise Benzyl. $R_6$ kann auch Aryl sein, beispielsweise Phenyl, Naphthyl oder Tolyl. $R_5$ und $R_6$ können zusammen 1,4-Butylen, 1,5-Pentylen oder 3-Oxa-1,5-pentylen sein, sodass sie zusammen mit dem N-Atom, an das sie gebunden sind, einen Pyrrolidin-, Piperidin- oder Morpholinring bilden.

$R_2$ und $R_3$ können zusammen eine Gruppe der Formel VIa darstellen, sodass sie zusammen mit dem C-Atom, an die sie gebunden sind, einen Pyrazolring bilden. Dieser ist substituiert durch die Reste R'' und R'''.

R'' kann Alkyl sein, vorzugsweise $C_1$-$C_6$ Alkyl, oder Phenyl, das substituiert sein kann durch $C_1$-$C_8$ Alkyl und/oder Hydroxyl. Beispielsweise kann R'' Methyl, Aethyl, Butyl, Hexyl, Phenyl, 4-Butylphenyl, 2-Hydroxyphenyl oder 3,5-Di-tert.butyl-4-hydroxyphenyl sein. R''' kann Phenyl oder Alkylphenyl sein, beispielsweise Tolyl oder Isopropylphenyl.

Bevorzugt sind solche Liganden der Formel VI, worin Y Oxo oder $=NR_6$ ist, $R_2$ $C_1$-$C_{12}$ Alkyl oder Phenyl und $R_3$ Wasserstoff ist oder $R_2$ und $R_3$ zusammen 1,4-Butadienylen ist und worin $R_4$ $C_1$-$C_{12}$ Alkyl oder $C_1$-$C_{12}$ Alkoxy ist. Besonders bevorzugt sind solche Liganden der Formel VI, worin Y Oxo ist.

Beispiele von Enolat-ionen der Formel VI sind die Anionen von Acetylaceton, Benzoylaceton, p-Chlorbenzoylaceton, 1-Phenylacetylaceton, Naphtoylaceton, p-Isopropylbenzoylaceton, Dibenzoylmethan, 1,1-Dibenzoylaethan, Acetessigsäure-methylester, Benzoylessigsäure-äthylester, α-Phenyl-acetessigsäure-äthylester, Benzoylmalonsäure-dibutylester, α-Acetylbuttersäure-äthylester, α-Acetyl-acetessigsäure-äthylester, α-Acetylbernsteinsäure-dimethylester, Salicylsäure-isopropylester, 2-Hydroxyacetophenon, 2-Hydroxybutyrophenon, 2-Hydroxybenzophenon, 2-Hydroxy-4-acetyloxy-benzophenon, α-Acetylcyclohexanon, 4-Phenylimino-pentanon-2, 2-Hydroxyacetophenon-N-benzylimin, 2-Hydroxy-acetophenon-N-methylimin, Salicylsäureamid, Acetessigsäure-dihexylamid, Benzoylessigsäure-dibutylamid, Cyclohexyl-carbonylessigsäure-cyclohexylamid, 1-Phenyl-3-methyl-4-acetylpyrazolon-5, 1-Phenyl-3-methyl-4-decanoyl-pyrazolon-5, Acetessigsäure-(1,2,2,6,6-pentamethylpiperidinyl-4)-ester, Benzoylessigsäure-N-(1-benzyl-2,2,6,6-tetramethyl-piperidinyl-4)-N-butylamid, 2-(2,2,6,6-Tetramethylpiperidinyl-1)-äthyl-acetoacetat, α-Acetylmalonsäure-bis-(2,2,6,6-tetramethylpiperidinyl-4)-ester oder 4-Hydroxy-3,5-di-tert.-butylbenzoyl-essigsäureäthylester. Besonders bevorzugt sind davon das Anion des Acetylaceton.

Aus diesen Definitionen von Me und L ergibt sich die Definition der Metallverbindung $MeL_w$. Beispielsweise kann gemäss der Erfindung als Metallverbindung $MeL_w$ verwendet werden: Mangan-acetat, Magnesiumpropionat, Calziumlaurat, Strontium-stearat, Zink-salicylat, Nickel-palmitat, Dibutylzinn-bis-(3,5-di-tert.butyl-4-hydroxyphenylacetat), Barium-2-äthylcapronat, Vanadyl-salicylat, Molybdändioxy-bis-(3,5-di-tert.butyl-4-hydroxybenzoat), Magnesiumoleat,

0001840

Zink-bis-(butylaminoacetat), Calcium-bis-(cyclohexylaminoacetat), Kobalt-bis-[2-(1,2,2,6,6-pentamethylpiperidin-4-oxy)-propionat], Aluminium-tris-(2,2,6,6-tetramethyl-4-aminopiperidin-4-carboxylat), Kobalt-bis-(dicyclohexylphosphinat), Cadmium-bis-(O-monomethyl-butylphosphonat), Nickel-alaninat, Kobalt-(p-dibutylaminobenzoat), Nickel-bis-(O-monoäthyl-α-hexylamino-benzylphosphonat), Magnesium-bis-(O-monobutyl-hexylphosphonat), Kobalt-bis-(O-monoäthyl-2-hydroxyhexylphosphonat), Aluminium-tris-(O-monobutyl-4-hydroxy-3,5-di-tert.butyl-benzylphosphonat), Kobalt-bis-(O-monoäthyldiäthylaminomethylphosphonat), Kobalt-bis-(O-monomethyl-morpholinomethylphosphonat), Nickel-bis-[O-monobutyl-2-(2,2,6,6-tetramethylpiperidino)-äthylphosphonat], Aluminium-tris-[α-(1,2,2,6,6-pentamethylpiperidinyl-4-amino)-heptylphosphonat], Zink-II-acetylacetonat, Chrom-III-acetylacetonat, Kobalt-II-benzoylacetat, Cadmium-1:2-chelat des Dibenzoylmethans, Zink-1:2-chelat des 6-Aethylhexandion-2,4, Kobalt-1:2-chelat des Salicylsäuredimethylamides, Aluminium-1:3-chelat des 2-Hydroxyacetophenon, Kobalt-1:2-chelat des Acetessigsäure-(1,2,2,6,6-pentamethylpiperidinyl-4)-esters, Nickel-1:2-chelat des 1-Phenyl-3-methyl-4-benzoylpyrazolon-5, Nickel-1:2-chelat des N-Butylsalicylaldimin, Kobalt-1:2-chelat des 2-Hydroxyacetophenon-N-phenylimin, Nickel-1:2-chelat des 2-Hydroxy-4-octyloxybenzophenon oder Nickel-II-(3-äthoxycarbonyl-acetylacetonat).

Während erfindungsgemäss alle Polymere, die einen Polyalkylpiperidinrest der Formel I bis V enthalten, als Komponente a) geeignet sind, ergibt sich von Seite der synthetischen Möglichkeiten zum Einbau in Polymere, dass die Piperidinreste der folgenden Strukturen VII bis XXVI besonders geeignet sind:

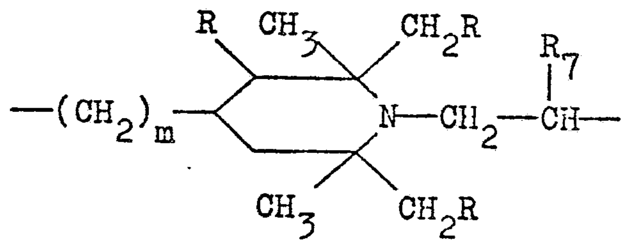

VII

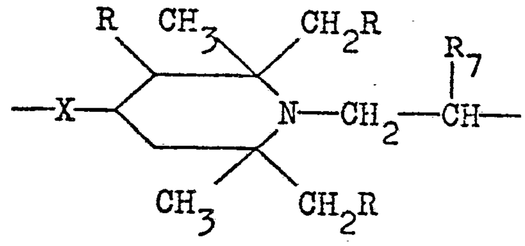

VIII

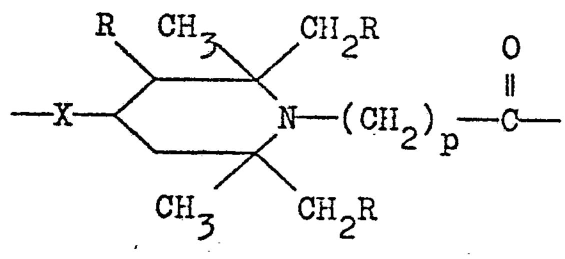

IX

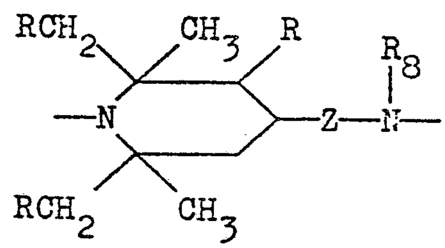

X

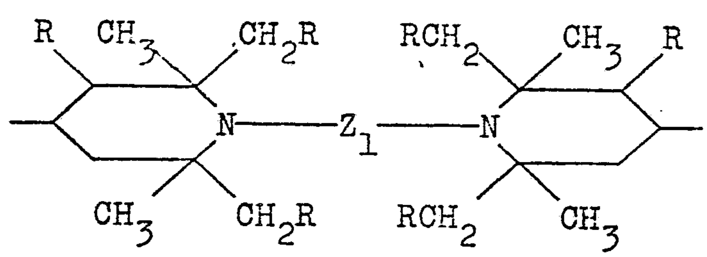

XI

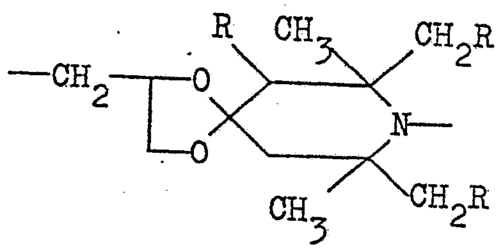

XII

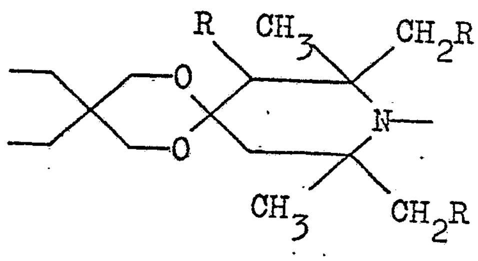

XIII

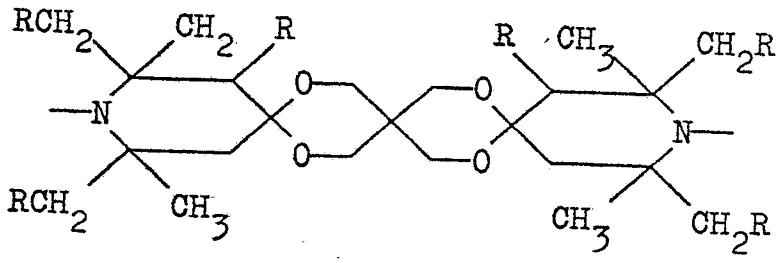

XIV

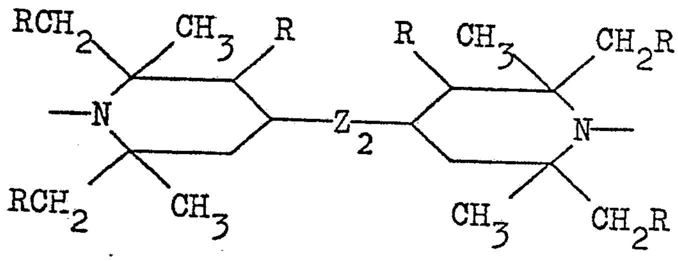

XV

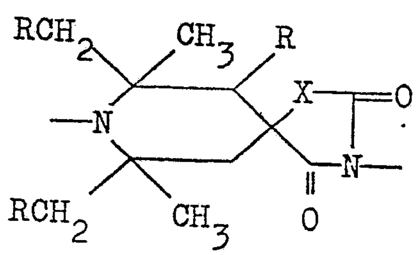

XVI

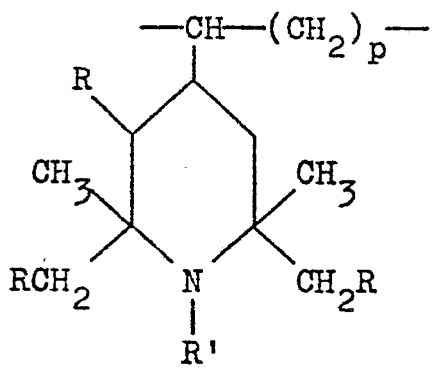

XVII

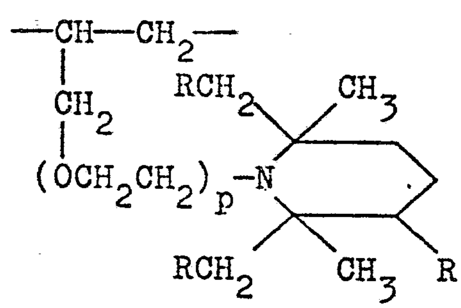

XVIII

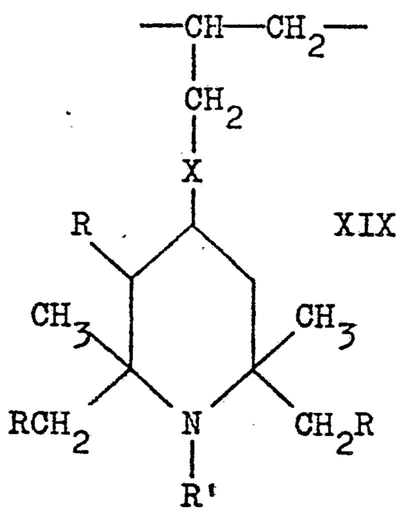

XIX

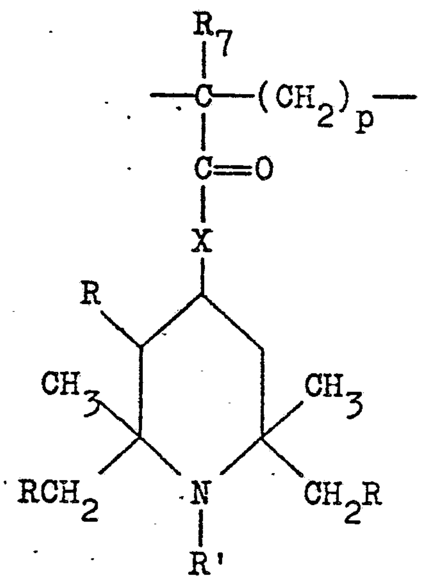

XX

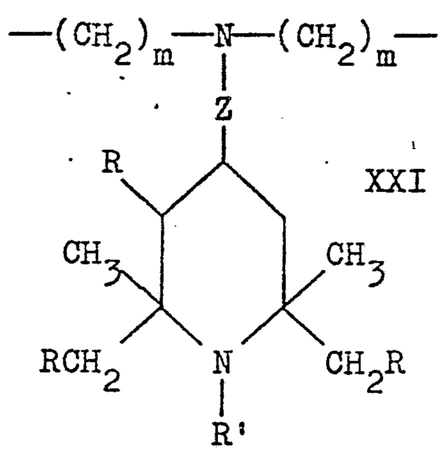

XXI

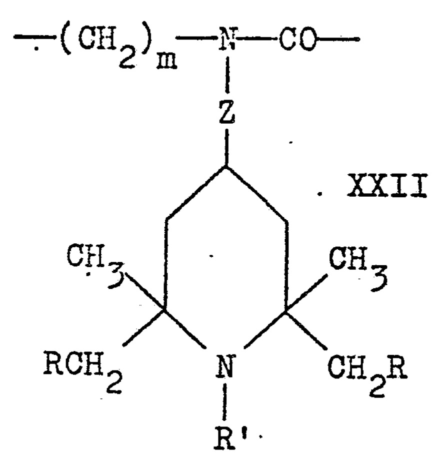

XXII

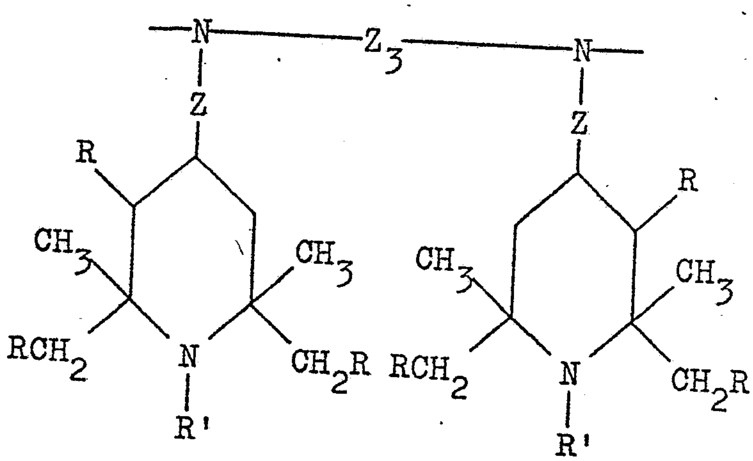

XXIII

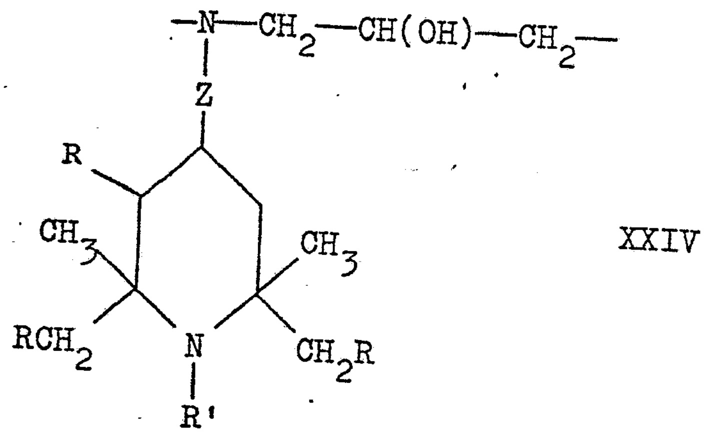

XXIV

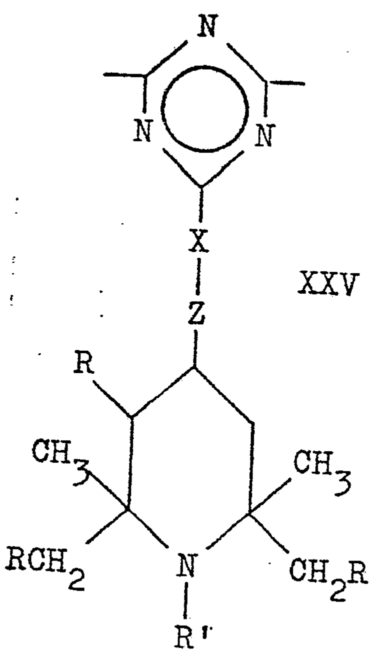

XXV

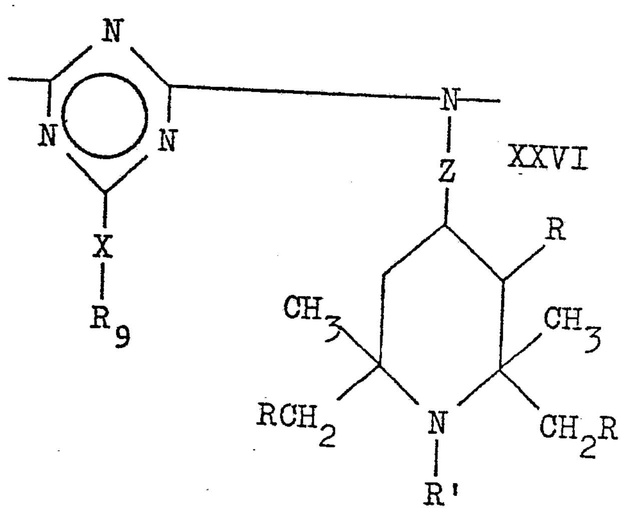

XXVI

worin

R und R' die eingangs gegebene Bedeutung haben,

m 1, 2 oder 3 ist

p null oder 1 ist,

$R_7$ Wasserstoff, Methyl oder Phenyl,

X Sauerstoff oder $NR_8$,

$R_8$ und $R_9$ unabhängig voneinander Wasserstoff, $C_1$-$C_{18}$ Alkyl, $C_5$-$C_{12}$ Cycloalkyl, $C_7$-$C_{11}$ Aralkyl oder Phenyl

Z eine direkte Bindung oder eine Gruppe der Formel $-CH_2CH_2-$ oder $-OCH_2CH_2CH_2-$

$Z_1$ $C_4$-$C_8$ Alkylen, $C_4$-$C_8$ Alkenylen oder p-Xylylen

$Z_2$ $C_4$-$C_{10}$ Alkylen, p-Xylylen, -CH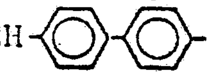$CH_2$- oder

Acyl

-N-, worin Acyl $C_2$-$C_8$ Alkanoyl oder $C_3$-$C_5$ Alkenoyl bedeutet,

$Z_3$ $C_2$-$C_{12}$ Alkylen, $C_6$-$C_{12}$ Arylen, 4,4'-Dicyclohexylenmethan oder einen Rest der Formel Phenylen-$Z_4$-Phenylen und

$Z_4$ $-CH_2-$, $>C(CH_3)_2$, -O- oder $-SO_2-$ bedeuten.

So eignen sich beispielsweise zum Einbau der Struktur VII in Polyester Verbindungen der Formel HO-VII-OH oder HOOC-VII-COOH oder Alkyl-OOC-VII-COO-Alkyl oder auch HO-VI-COOH. Zum Einbau derselben Struktur in Polyamide eignen sich Verbindungen der Formel $H_2N$-VII-$NH_2$ HOOC-VII-COOH, $H_2N$-VII-COO-Alkyl oder auch $H_2N$-VII-$CH_2NH_2$.

In ähnlicher Weise lassen sich zum Einbau einer Struktur der Formel VIII Verbindungen der Formel H-VIII-OH, H-VIII-COOH, HO-$CH_2CH_2$-VIII-OH, H-VIII-$CH_2NH_2$ oder HOOC-$CH_2$-VIII-COOH verwenden. Solche für Polykondensationen geeignete difunktionelle Piperidinderivate sind bekannte Verbindungen oder lassen sich in analoger Weise herstellen.

Polymerisierbare Derivate von Polyalkylpiperidinen sind beispielsweise Acrylate bzw. Methacrylate von 4-Hydroxypiperidinen oder (Meth)acrylamide von 4-Aminopiperidinen, wie sie in der DT-OS 2 040 983 beschrieben sind. Diese eignen sich zur Homopolymerisation wie auch zur Copolymerisation mit anderen ungesättigten Verbindungen, vorzugsweise mit anderen Acryl- bzw. Methacrylsäurederivaten.

Epoxyd-derivate von Polyalkylpiperidinen können sowohl zur Polymerisation wie zur Polyaddition verwendet werden. Beispielsweise lassen sich 4-Glycidyläther von 1-Alkylpiperidinen durch Ringöffnungspolymerisation in Polyäther überführen. 4-Bisglycidylaminopiperidine oder 1-Glycidyl-4-glycidyläther von Piperidinen lassen sich hingegen durch Polyaddition an Diamine zu Polyaminen oder an Bis-phenole zu aromatischen Polyäthern umsetzen.

Triazinhaltige Polymere mit den Strukturen XXV oder XXVI lassen sich nach dem Verfahren der DT-OS 2 636 144 herstellen. Polyamine, die die Struktur XXIII enthalten, sind aus der DT-OS 2 611 208 bekannt.

Besonders bevorzugt sind Gemische, die als Komponente a) die folgenden Typen von Polymeren enthalten:

1) Polyester, deren wiederkehrende Struktureinheit einen Polyalkylpiperidinring der Formel VIII, IX, XXI oder XXIII enthält, worin m 1 oder 2 ist, R und R' Wasserstoff oder Methyl sind und p, $R_7$, X, Z und $Z_3$ die vorhin angegebene Bedeutung haben,

2) Polyamide, deren wiederkehrende Struktureinheit einen Rest der Formel XV, XXI oder XXIII enthält, worin R und R' Wasserstoff oder Methyl sind und m, Z, $Z_2$ und $Z_3$ die vorhin gegebene Bedeutung haben,

3) Polyaminotriazine, deren wiederkehrende Struktureinheit einen Rest der Formel X, XXIII, XXV oder XXVI enthält, worin X $NR_8$ bedeutet, Z eine direkte Bindung ist, R und R' Wasserstoff oder Methyl bedeuten und $R_8$, $R_9$ und $Z_3$ die vorhin gegebene Bedeutung haben,

4) Polyamine, deren wiederkehrende Struktureinheit einen Rest der Formel XXIII oder XXIV enthält, worin Z eine direkte Bindung ist, R und R' Wasserstoff oder Methyl bedeuten und $Z_3$ die vorhin gegebene Bedeutung haben,

5) Polyacrylate oder Polymethacrylate, deren wiederkehrende Struktureinheit einen Rest der Formel XX enthält, worin p 1 ist und $R_7$ Wasserstoff, X Sauerstoff, p = 1 und R und R' Wasserstoff oder Methyl bedeuten,

6) Copolymerisate aus einem Acrylat oder Methacrylat, das im Esterrest einen Polyalkylpiperidinrest enthält, und einem äthylenisch ungesättigten Monomeren, vorzugsweise einem Acrylat oder Methacrylat, das keinen Piperidinrest enthält.

Beispiele für Polyester, die als Komponente a) verwendet werden können, sind die Polymeren der folgenden Formeln, wobei n den Polymerisationsgrad ausdrückt, der 2 bis etwa 200 sein kann, meist jedoch im Bereich von 5 bis 20 liegt. Hierzu gehören auch Mischpolyester, wie sie z.B. bei Verwendung von zwei verschiedenen Dicarbonsäuren oder Diolen entstehen:

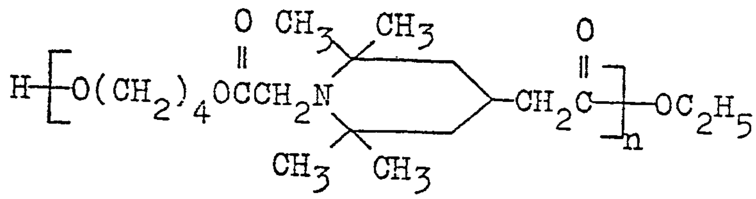

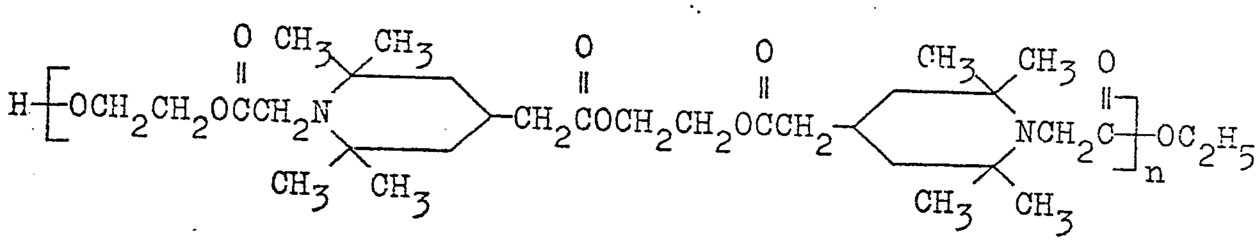

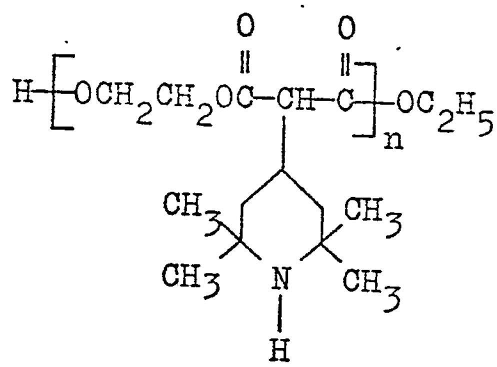

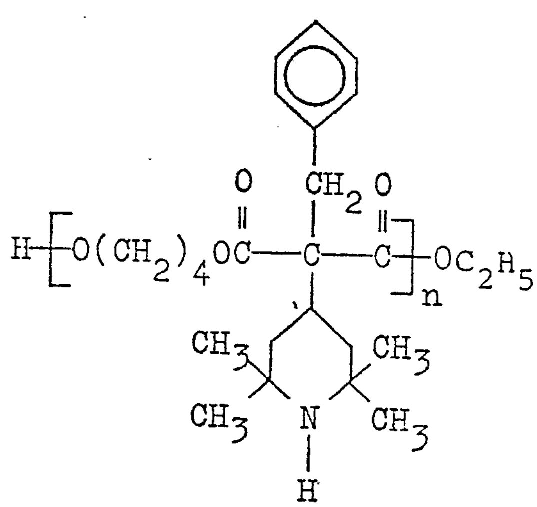

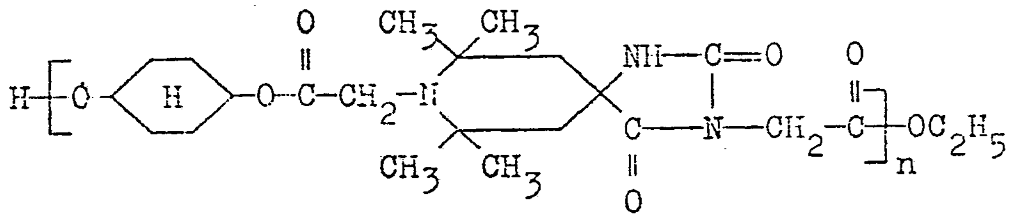

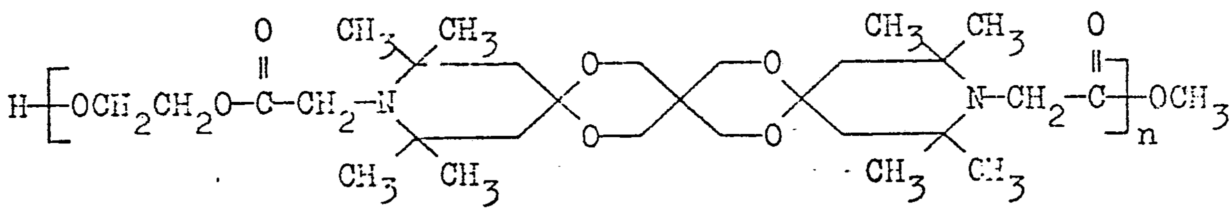

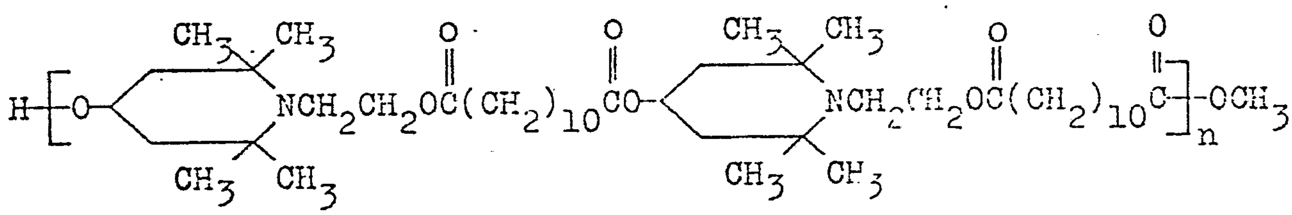

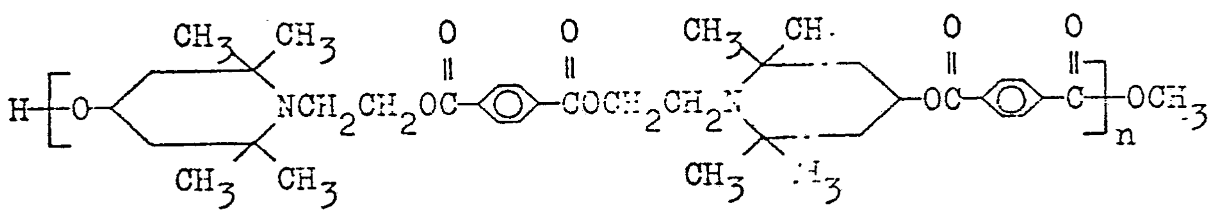

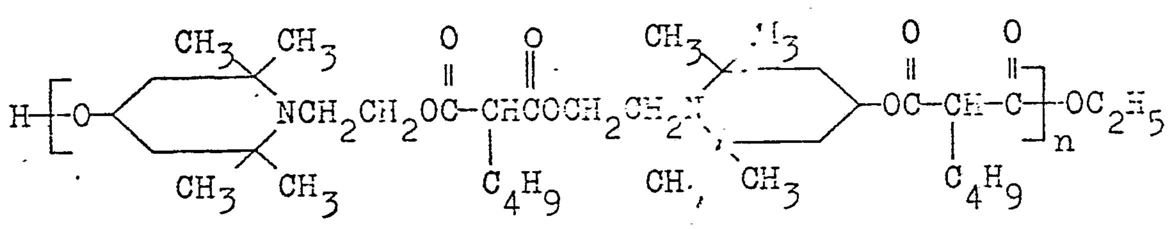

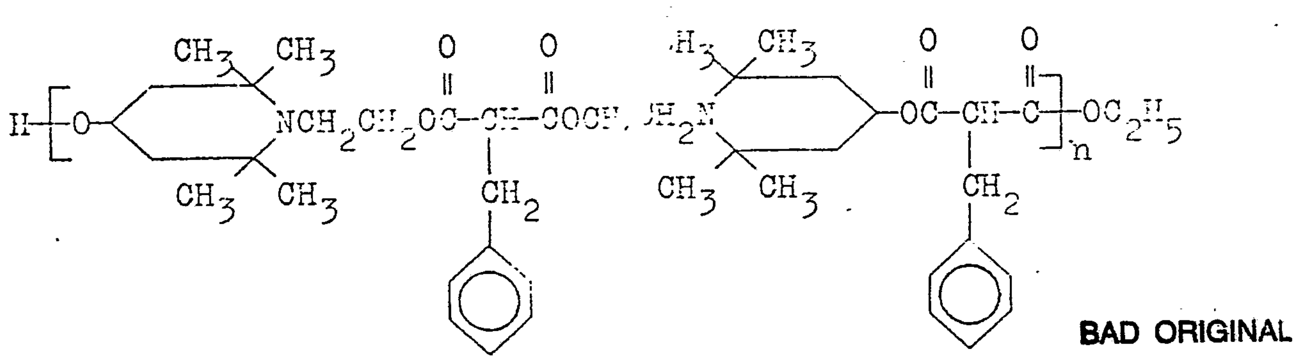

BAD ORIGINAL

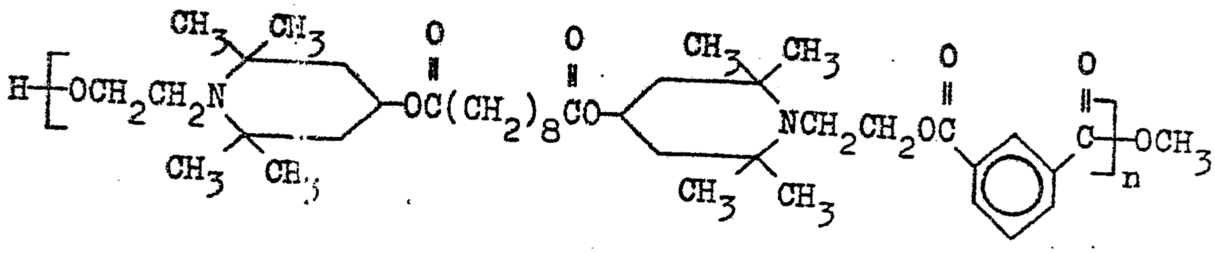

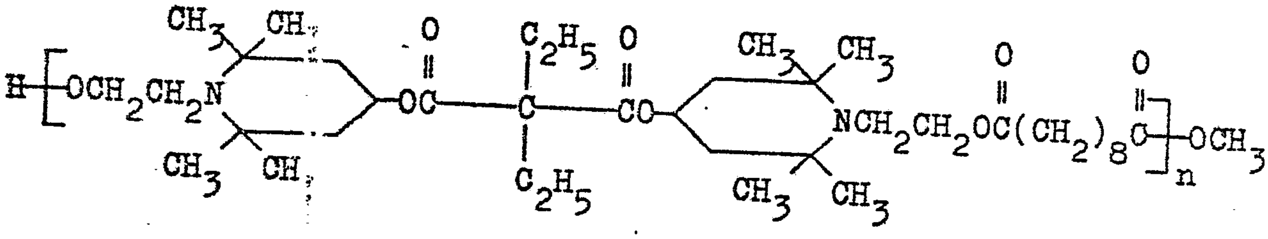

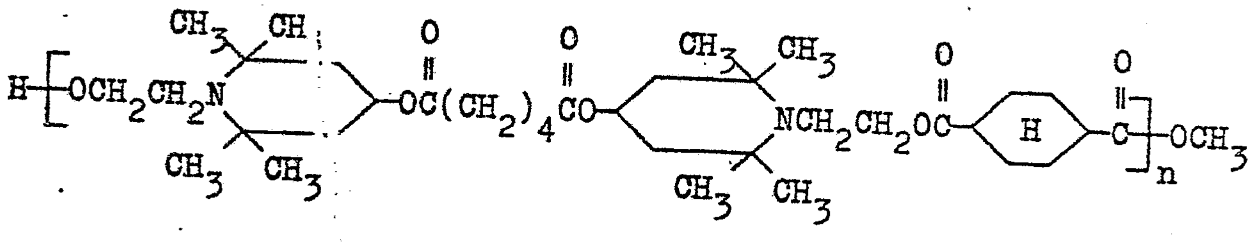

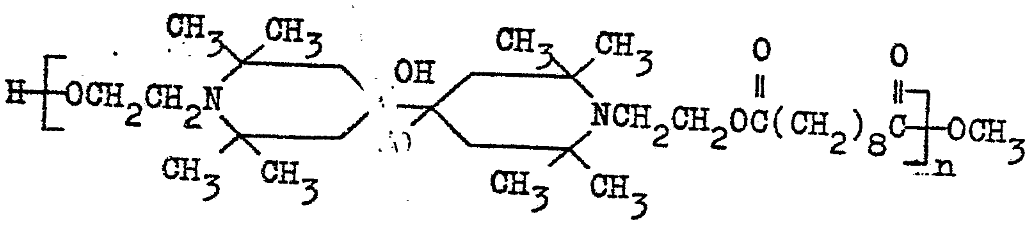

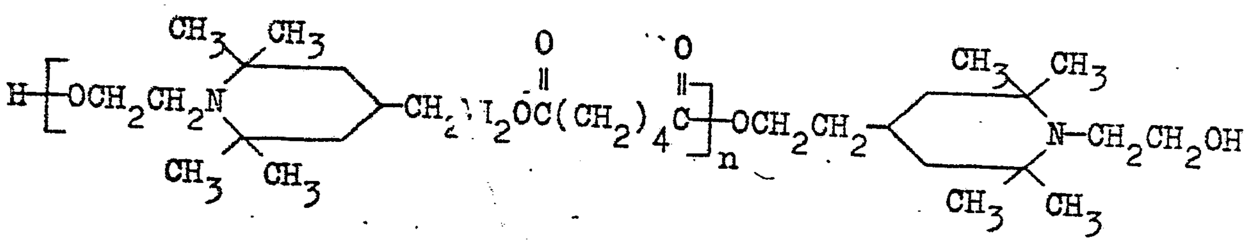

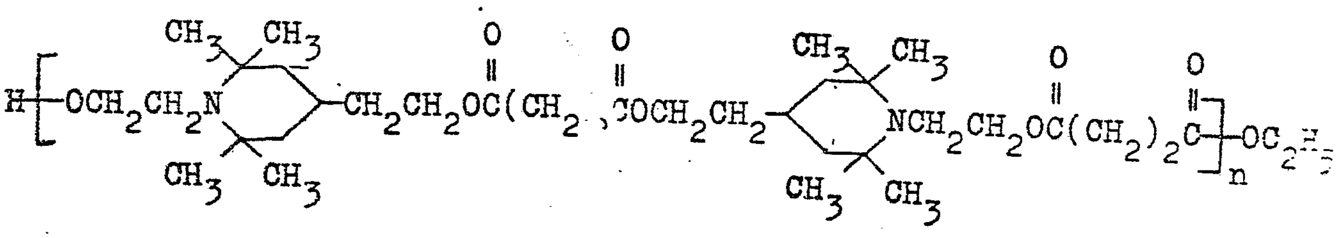

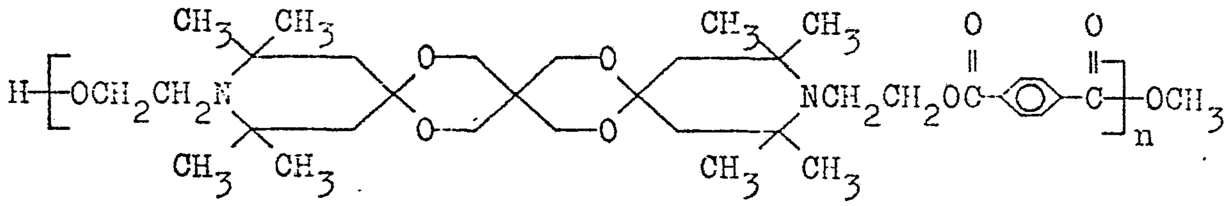

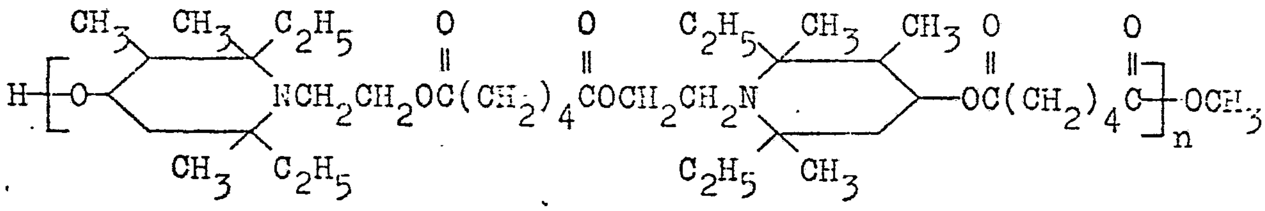

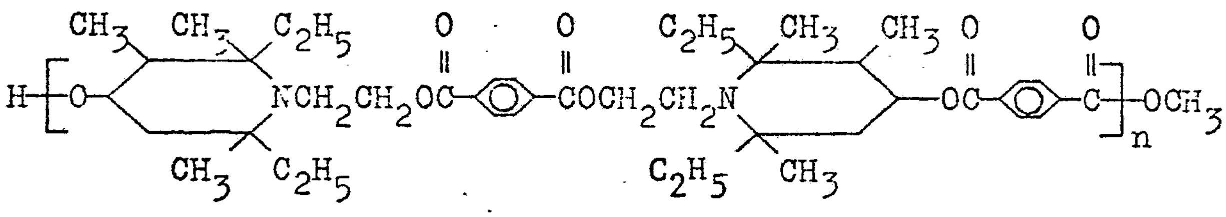

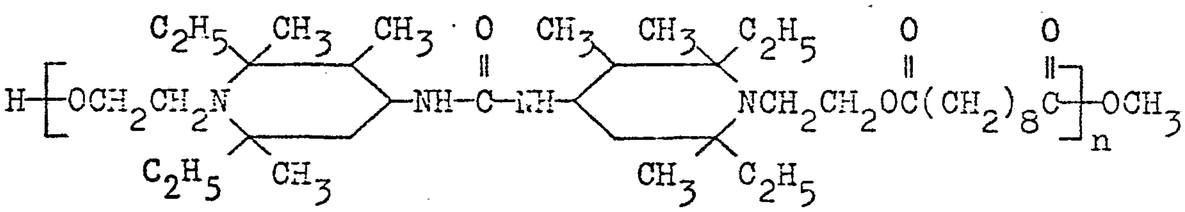

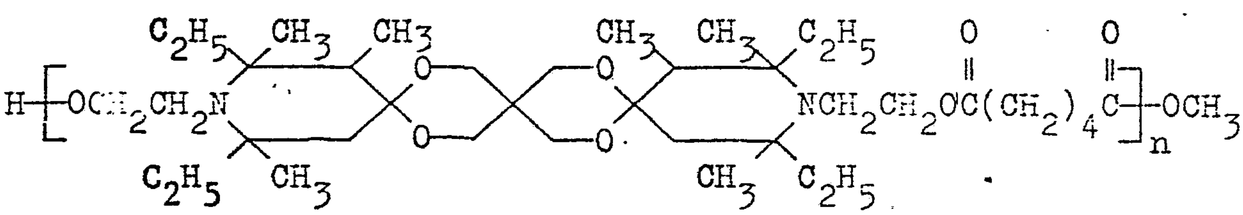

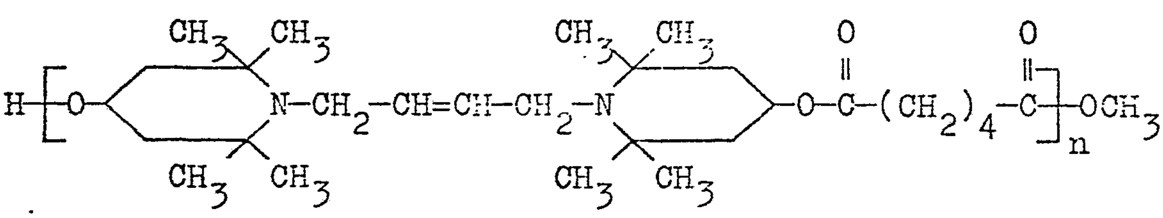

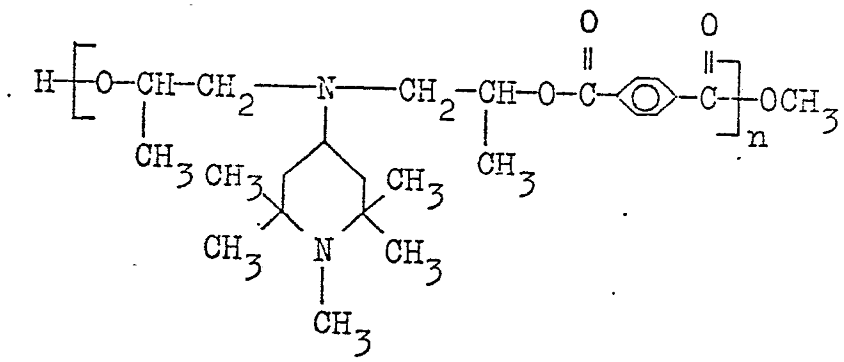

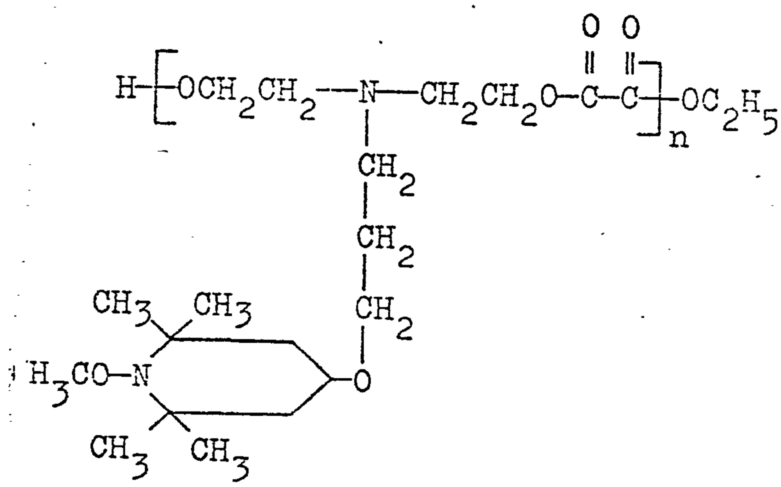

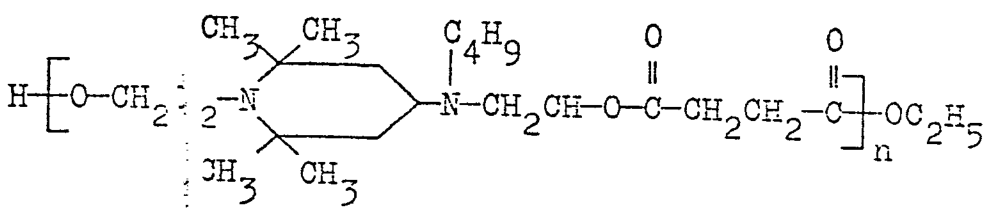

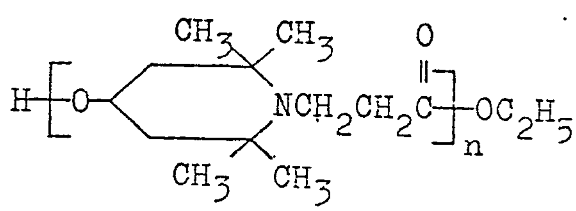

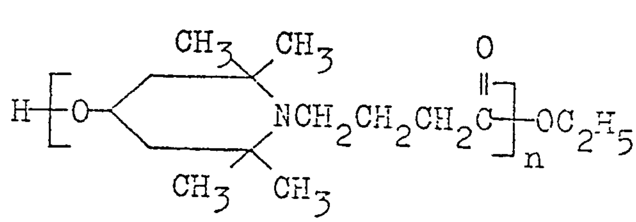

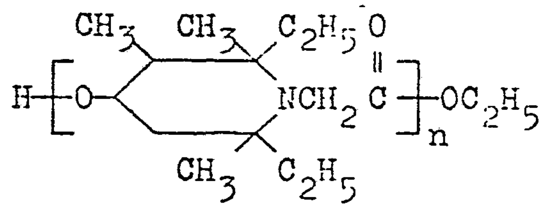

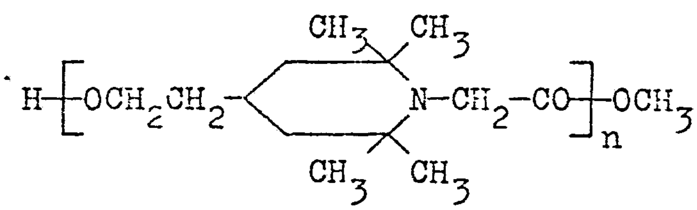

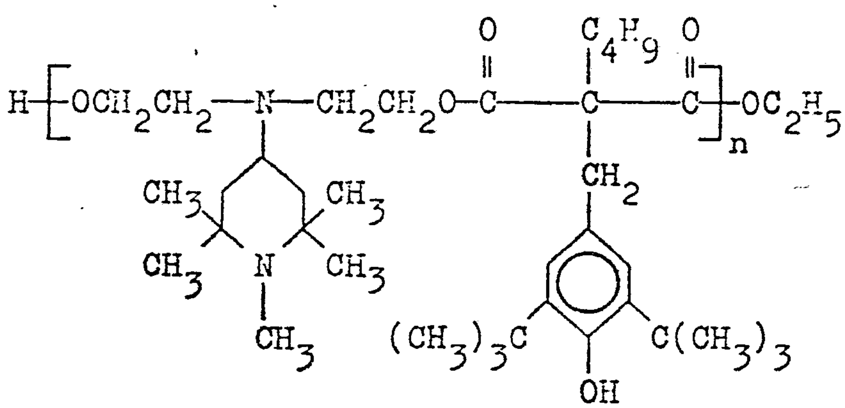

Beispiele von Polyamiden als Komponente a) sind die folgenden Polymeren:

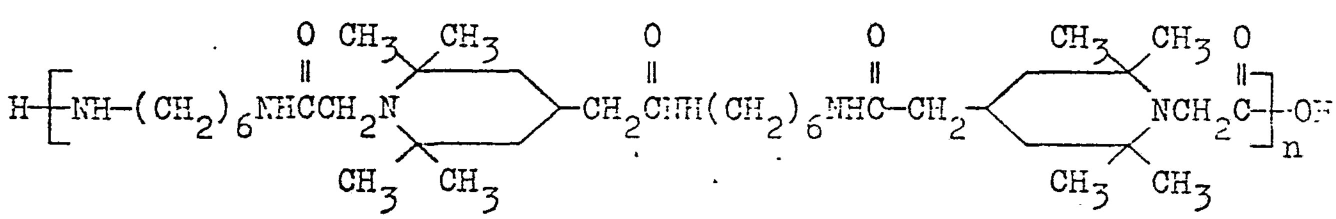

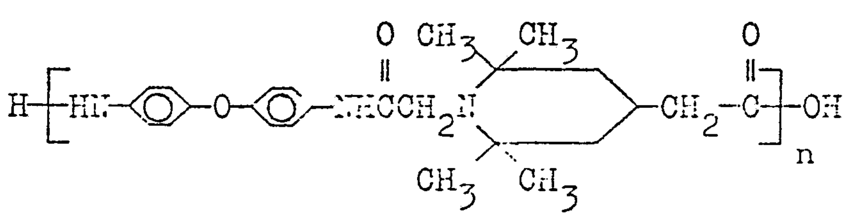

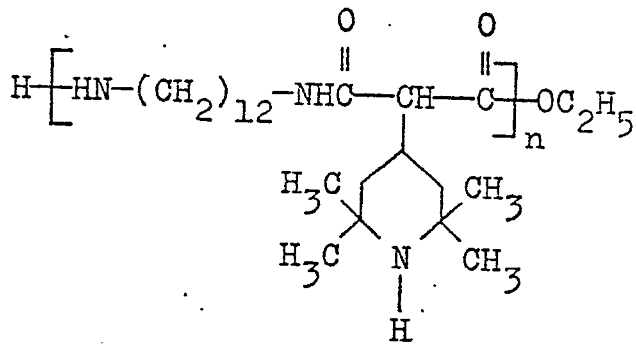

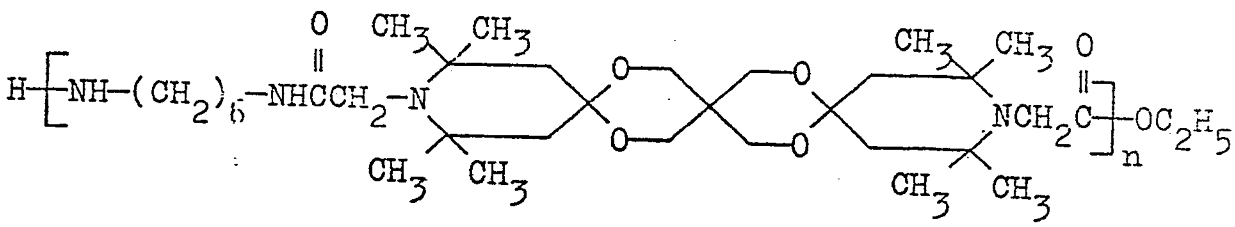

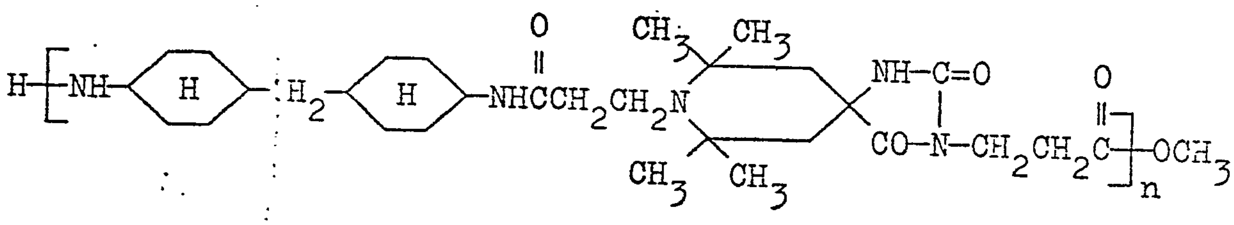

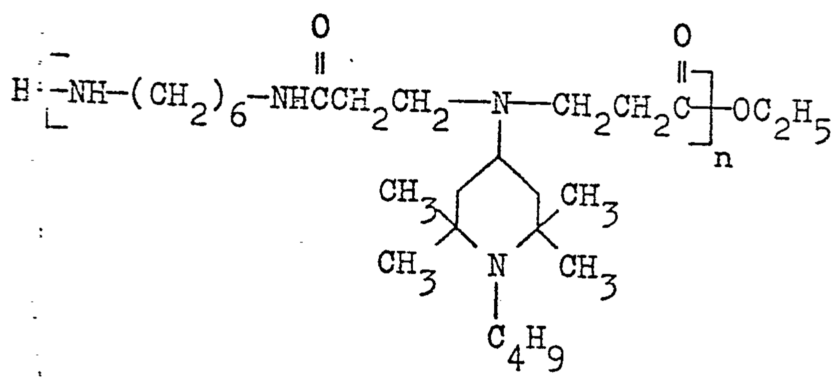

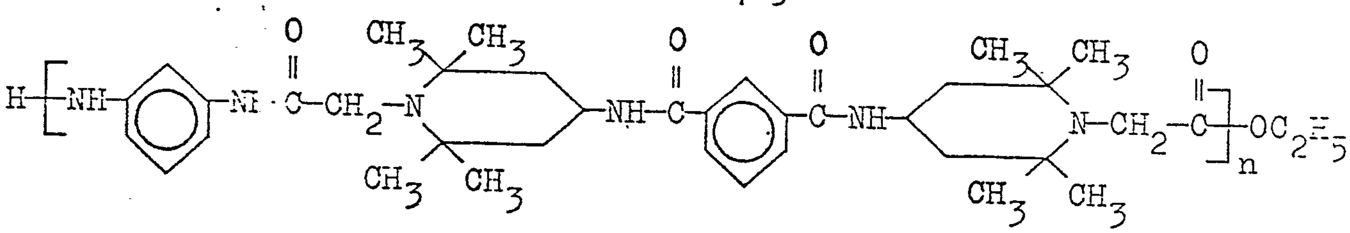

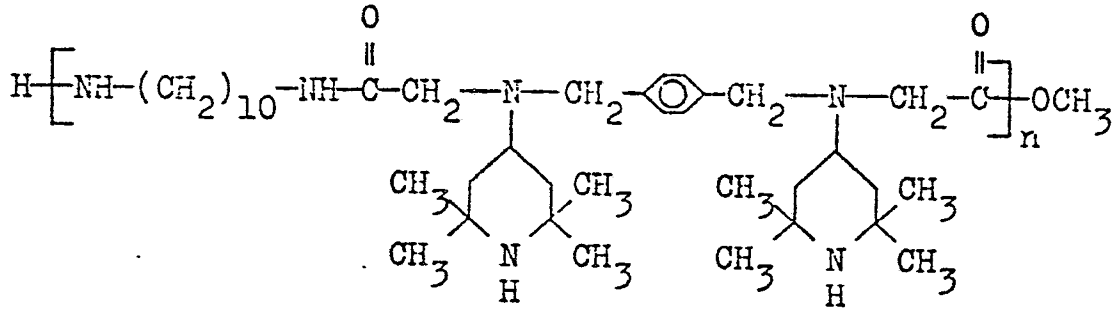

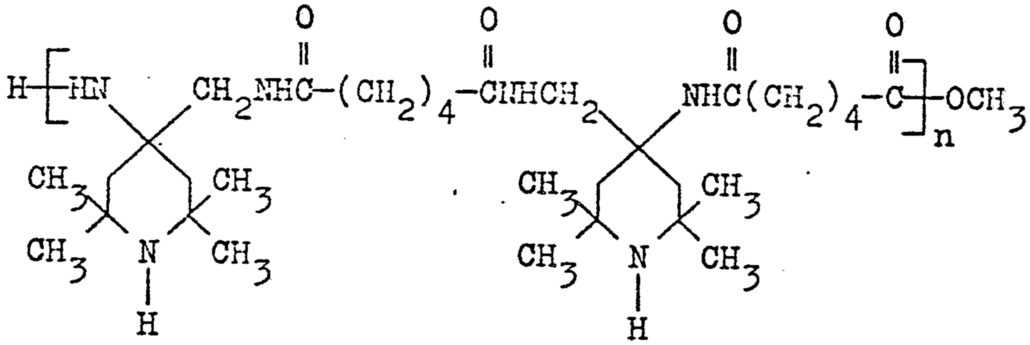

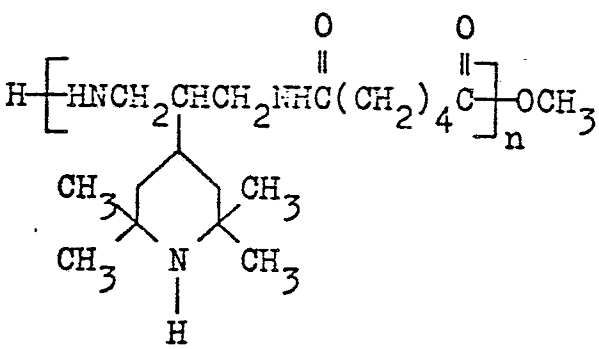

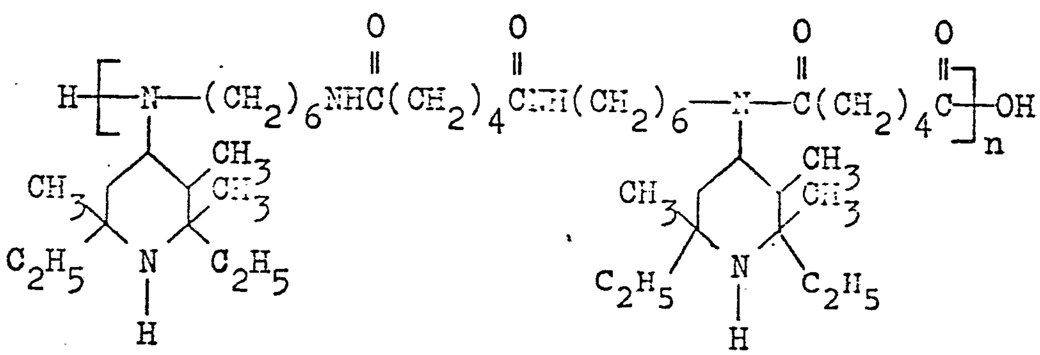

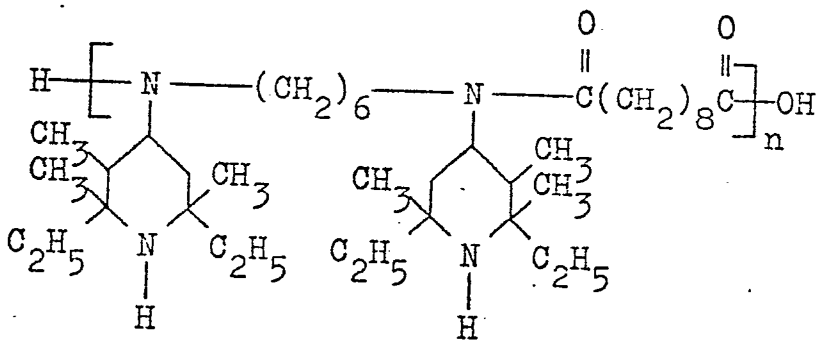

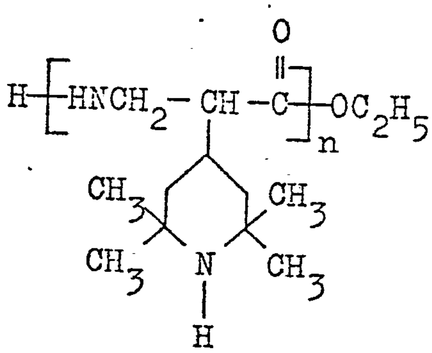

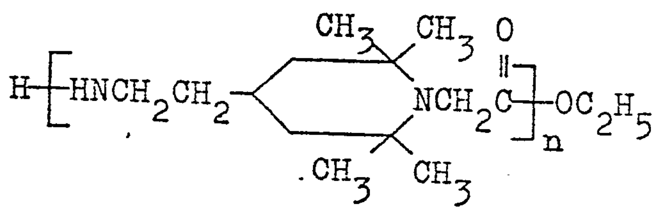

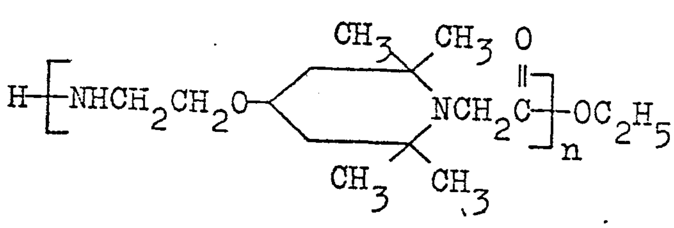

Beispiele für Polyurethane und Polyharnstoffe sind die folgenden Verbindungen:

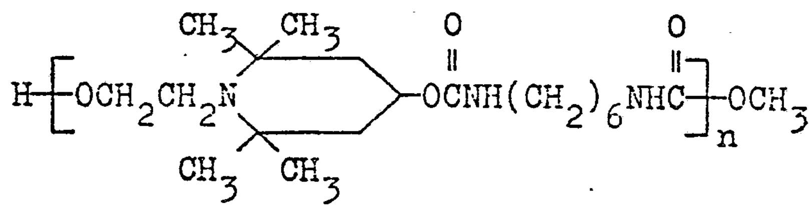

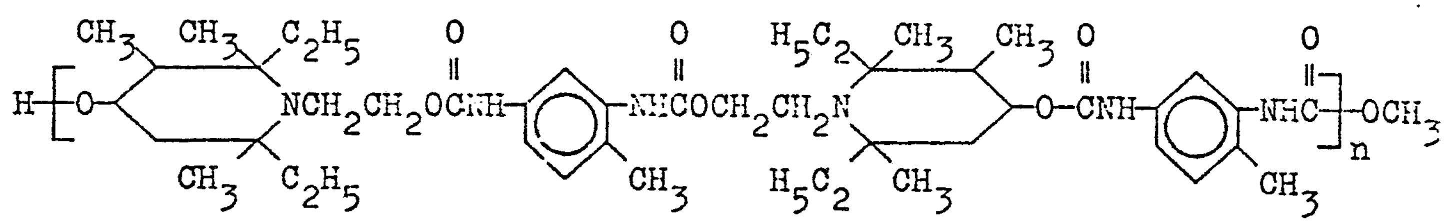

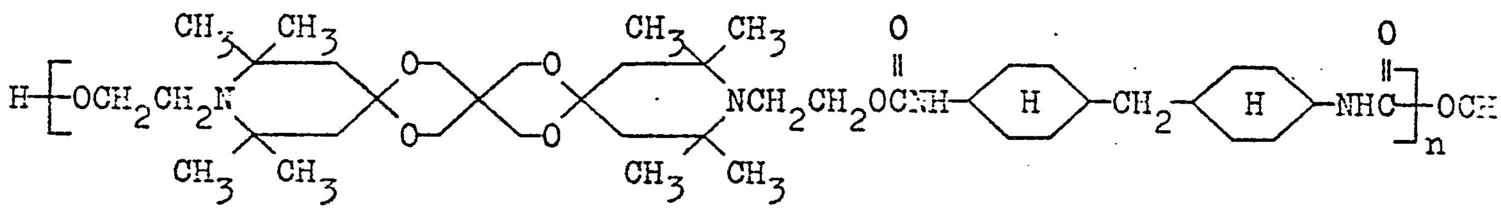

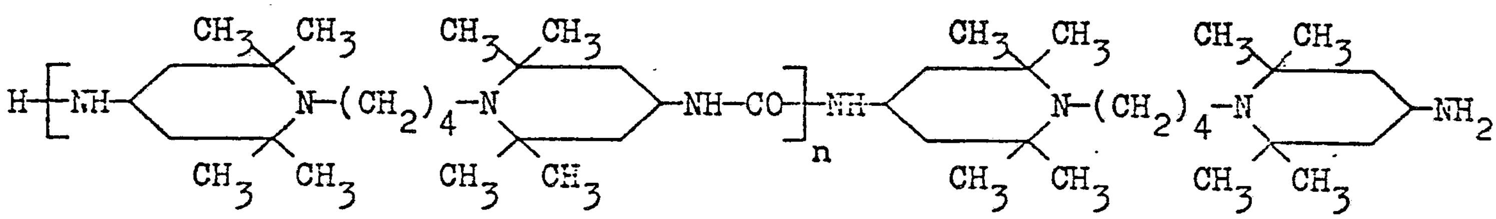

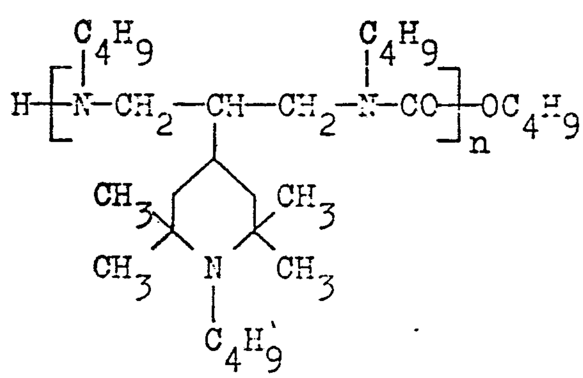

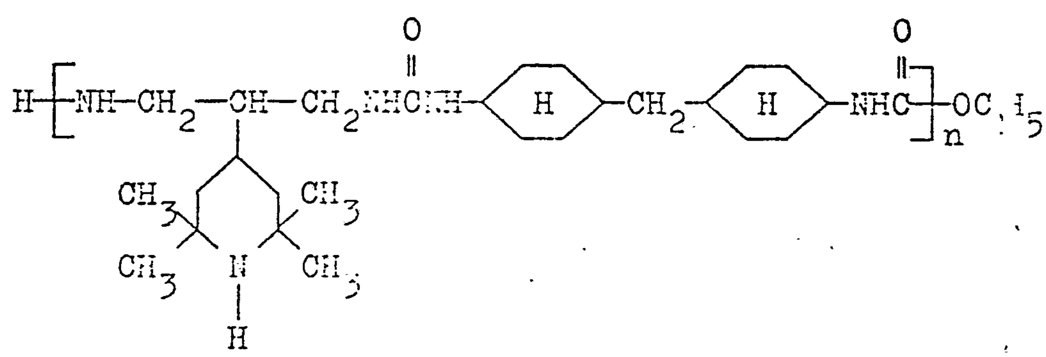

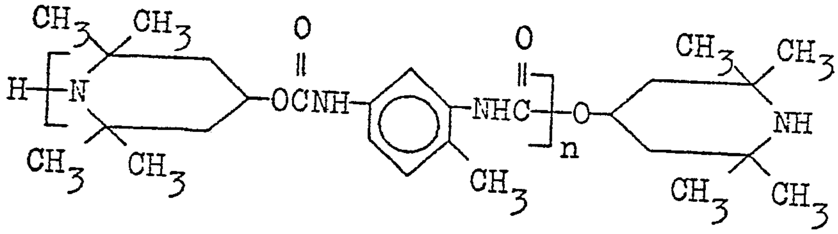

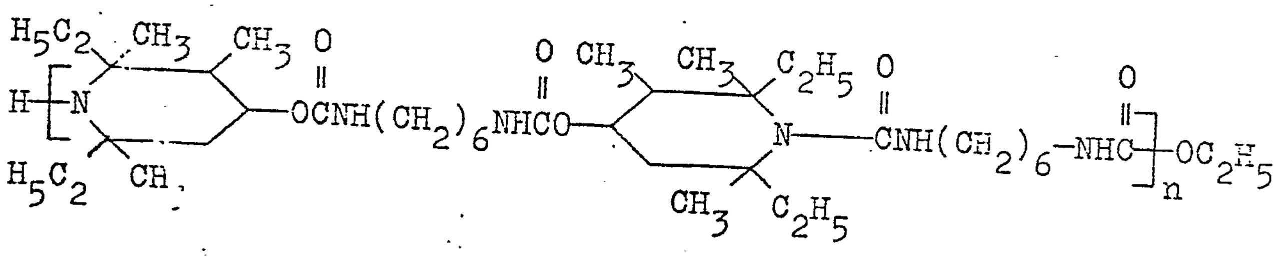

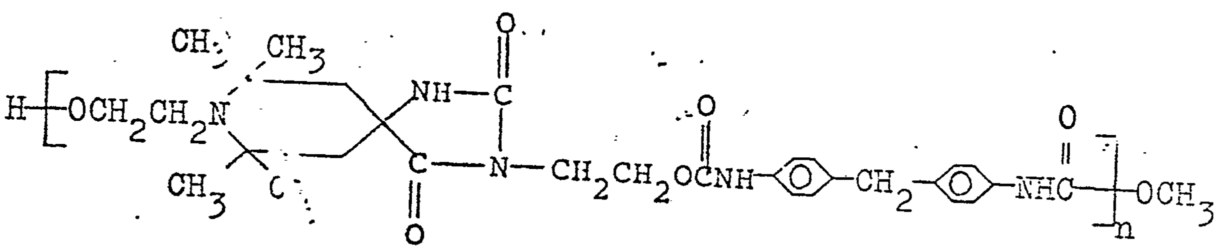

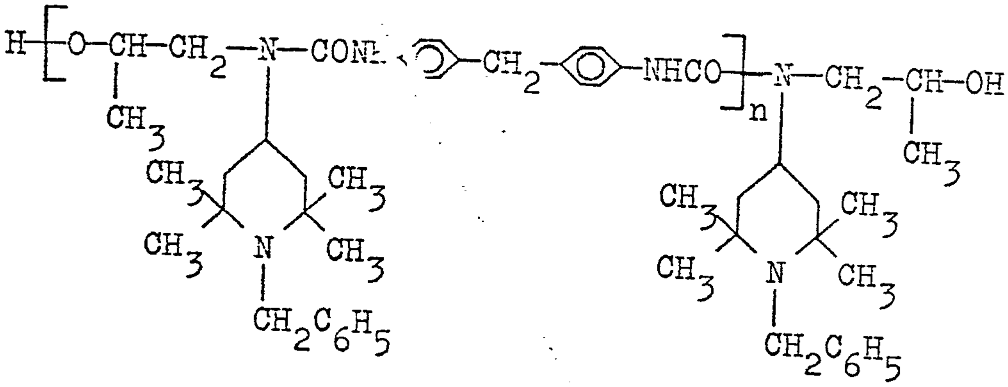

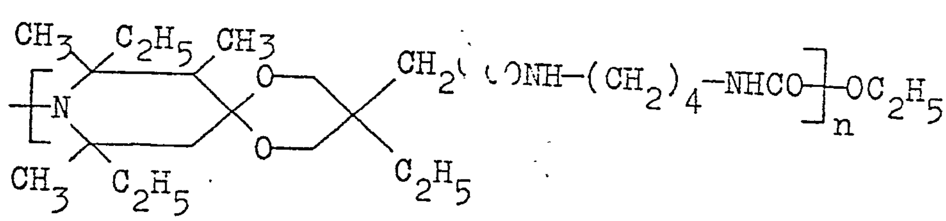

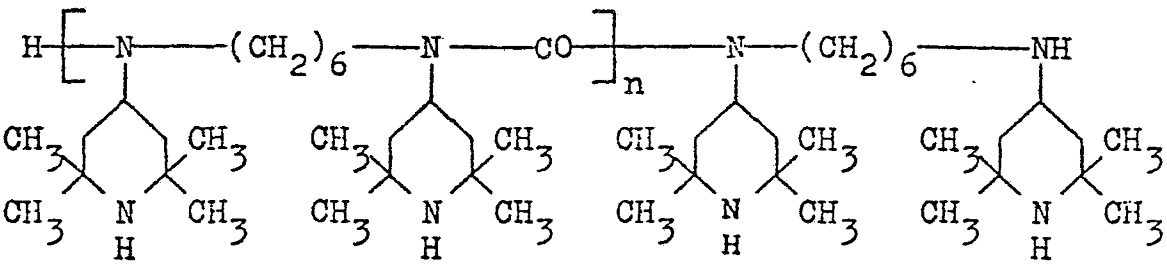

Beispiele für Polyäther als Komponente a) geben die folgenden Formeln wieder:

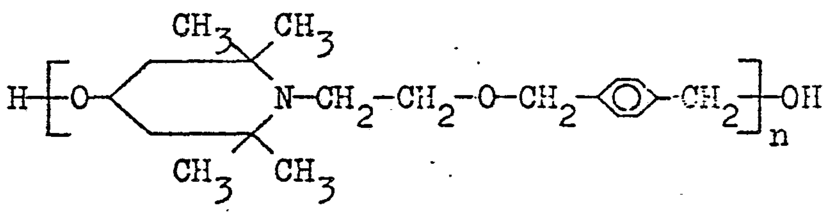

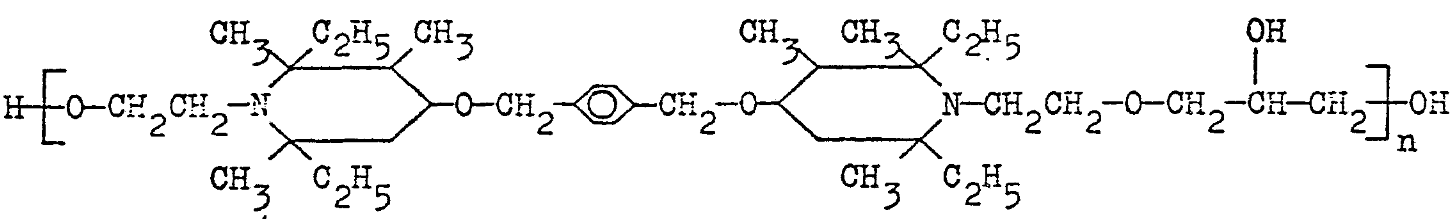

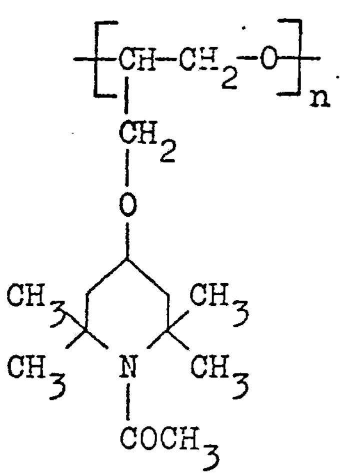

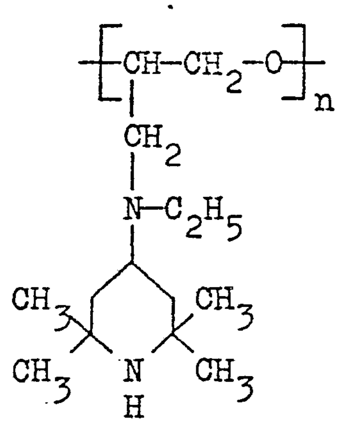

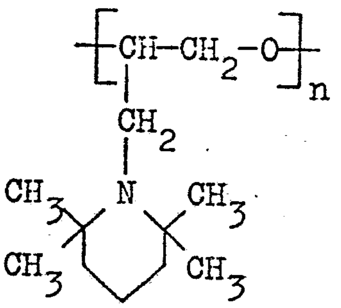

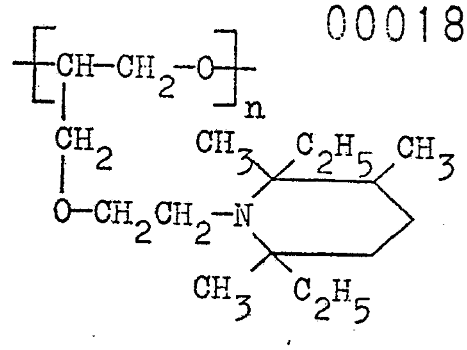

Beispiele für Polyamine als Komponente a) sind folgende Verbindungen:

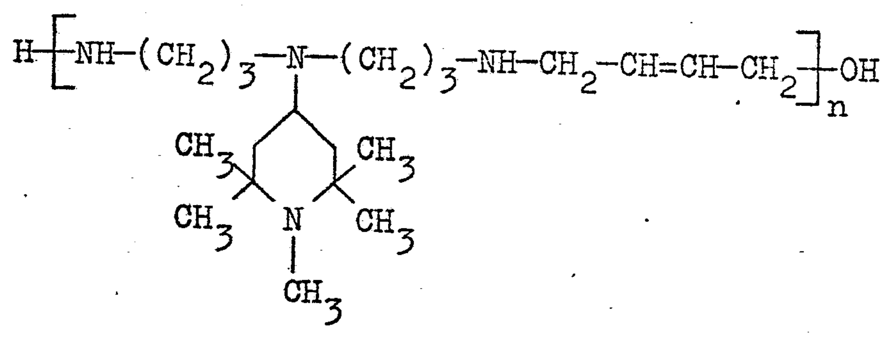

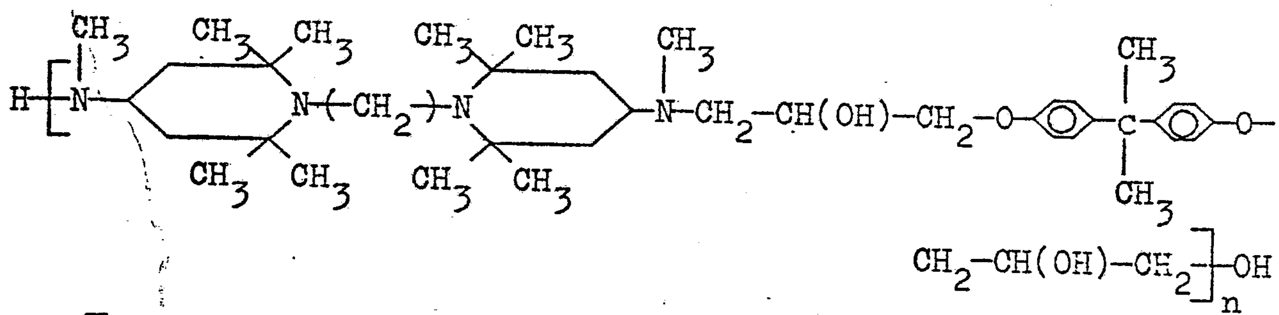

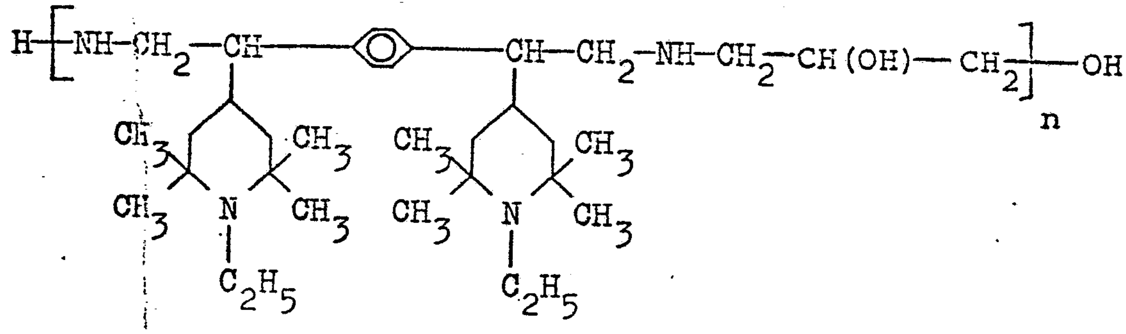

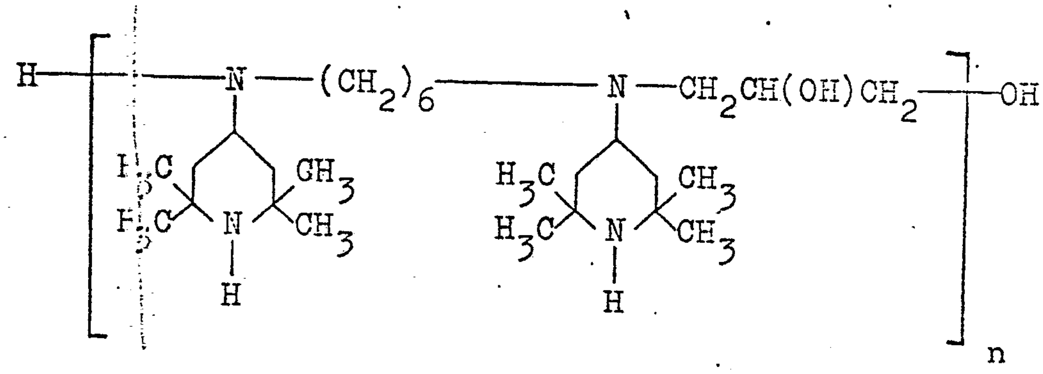

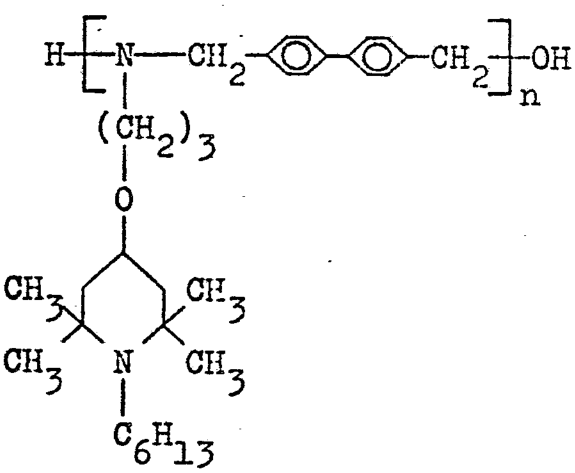

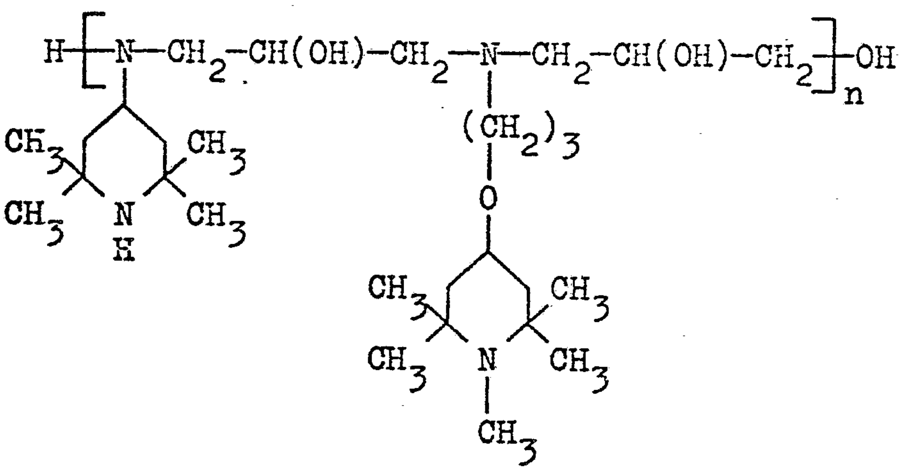

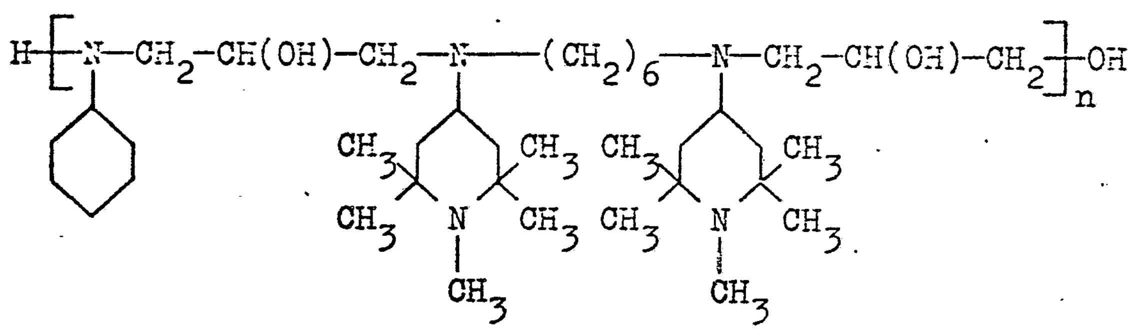

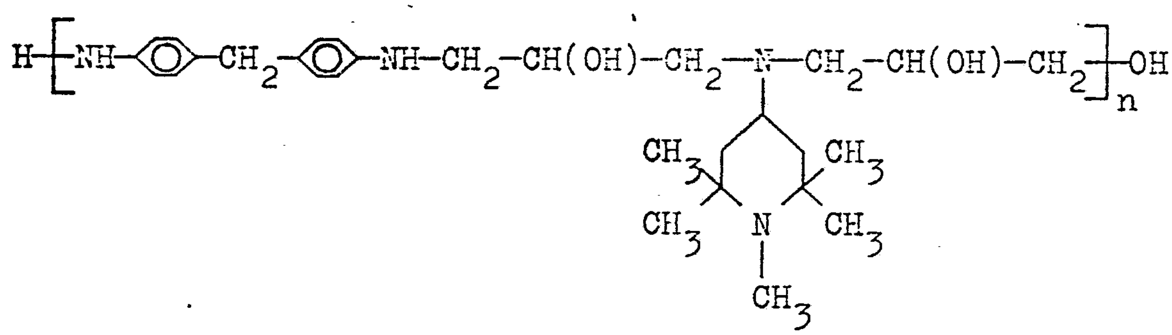

Beispiele für Polyaminotriazine als Komponente a) sind folgende Verbindungen:

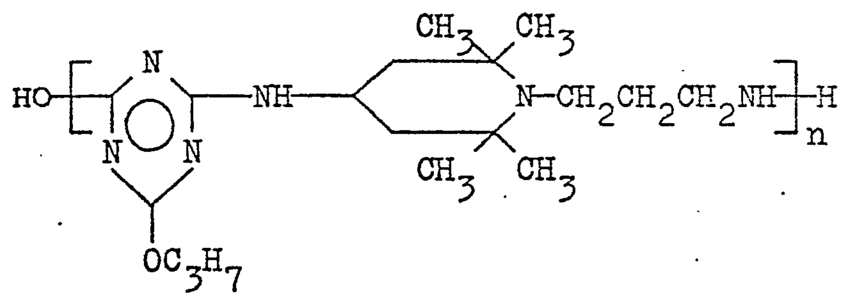

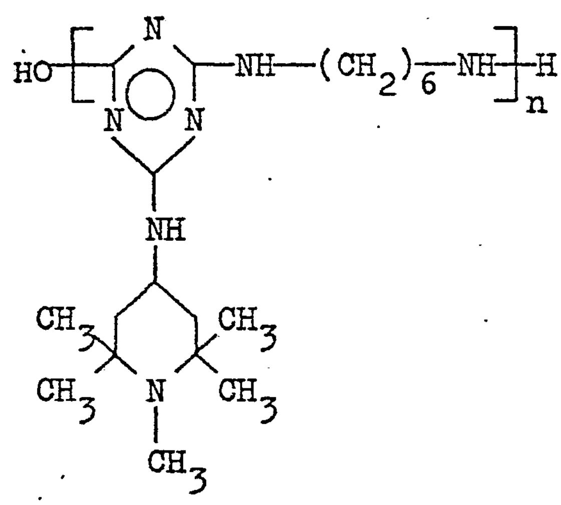

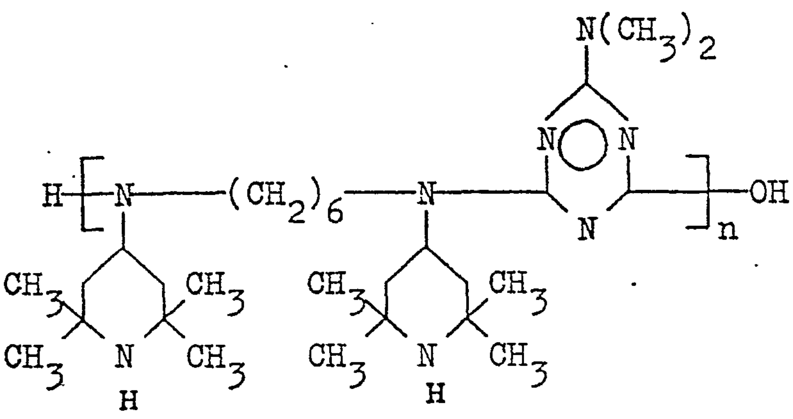

Beispiele für Mischpolykondensate sind die folgenen Polyester-amide:

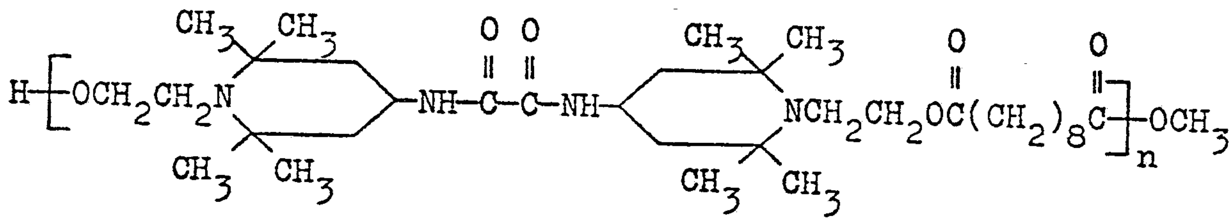

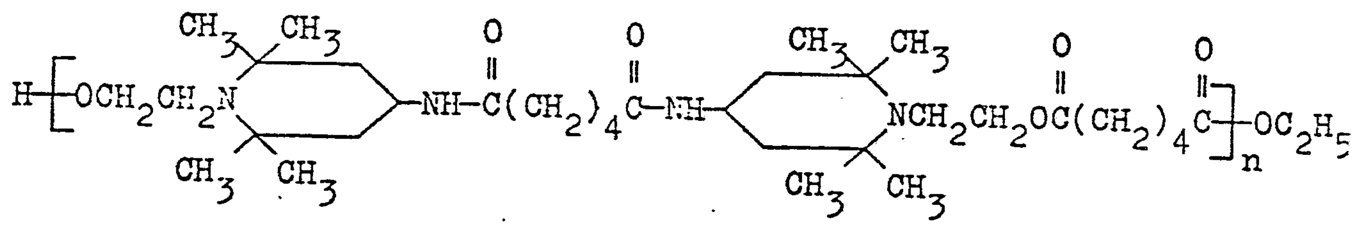

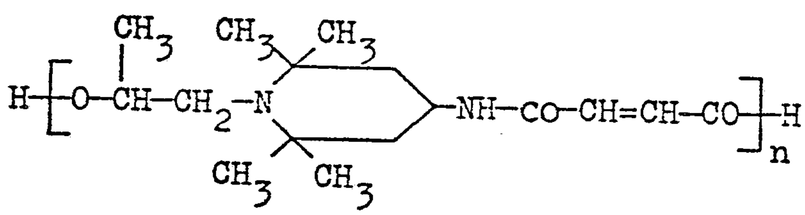

Polyester-harnstoffe:

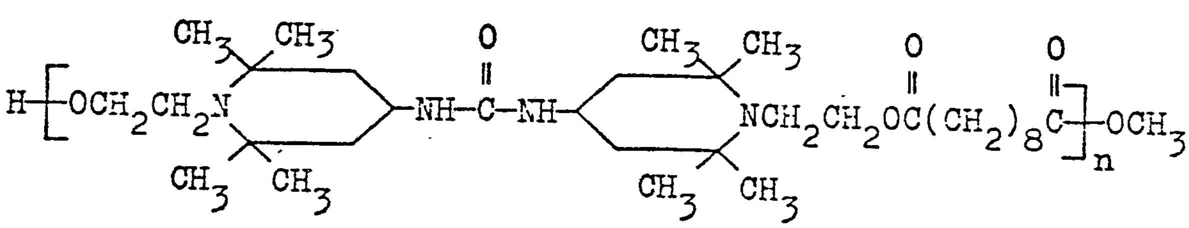

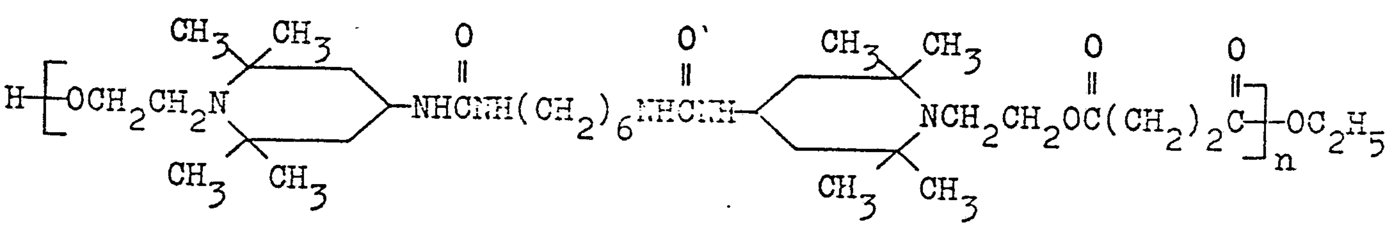

Polyester-urethane:

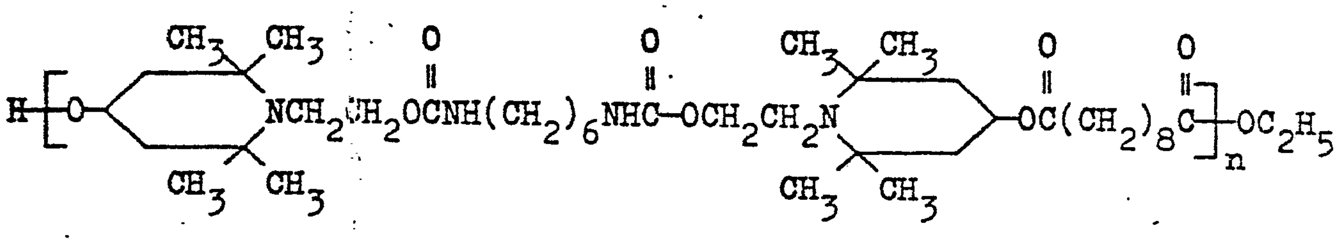

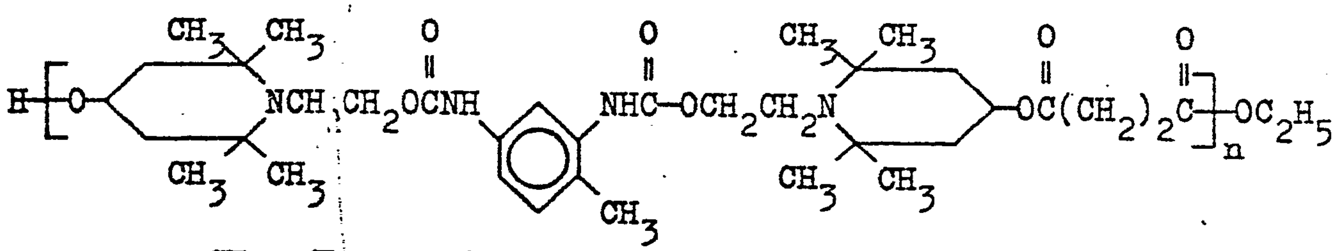

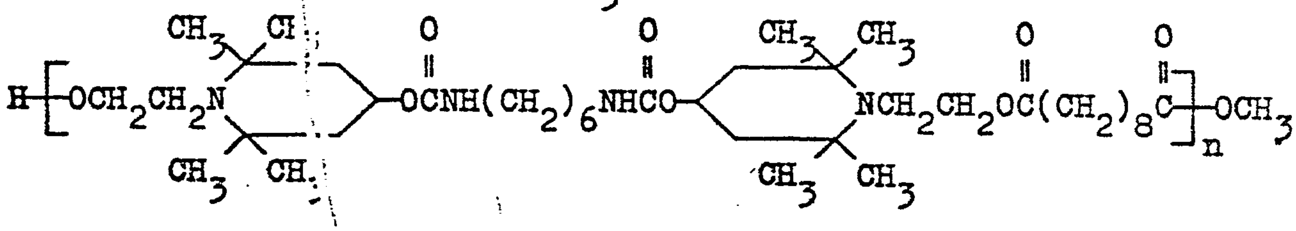

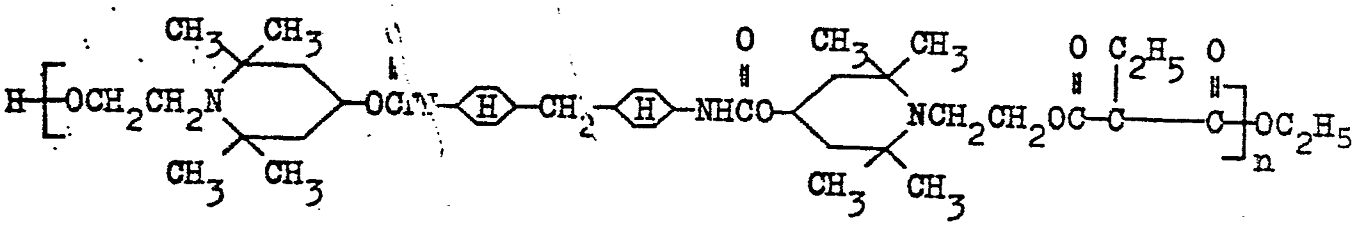

Polyurethan-harnstoffe:

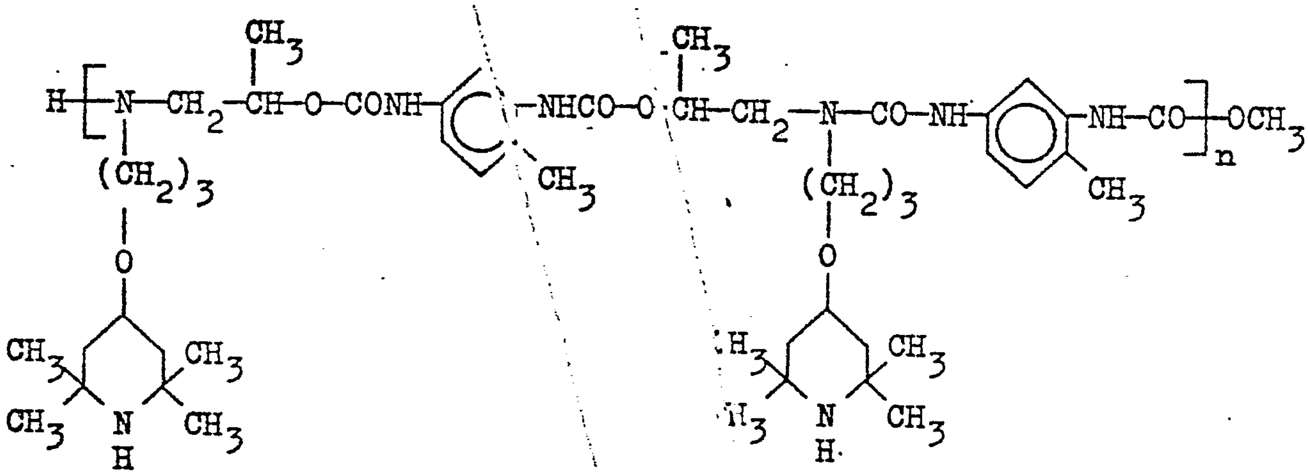

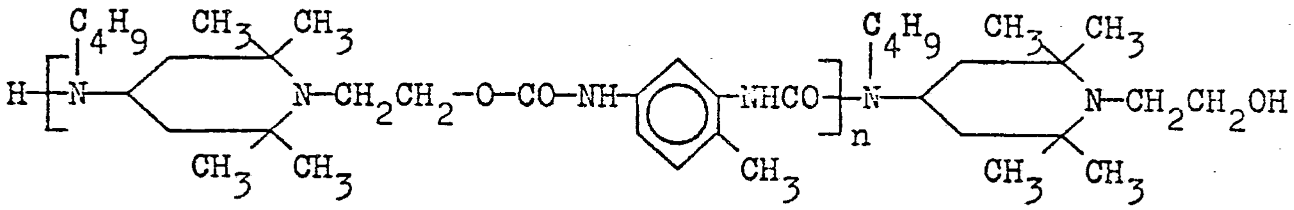

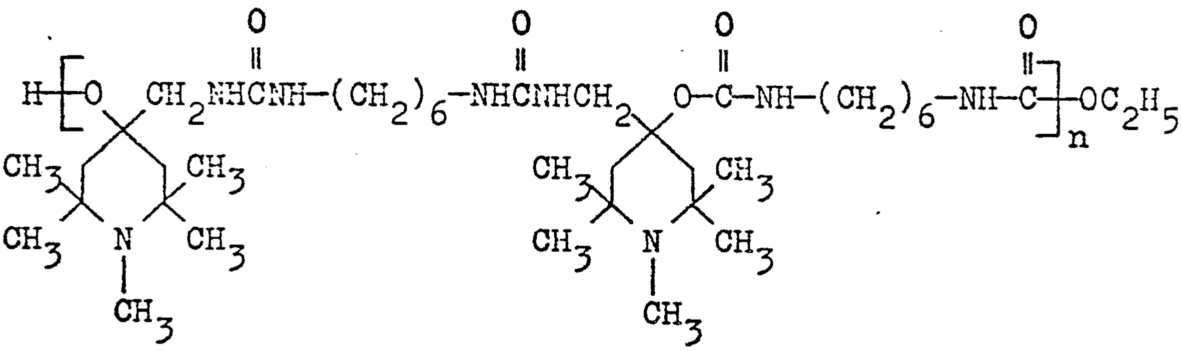

Polyäther-amide:

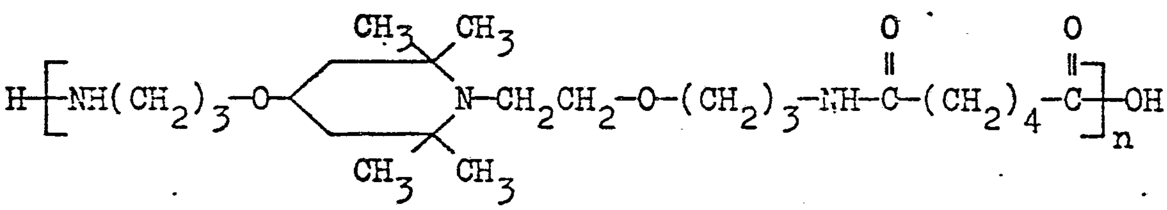

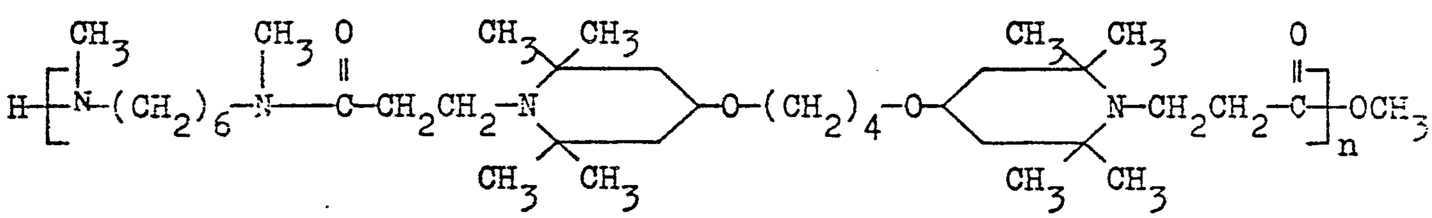

oder Polyäther-amine:

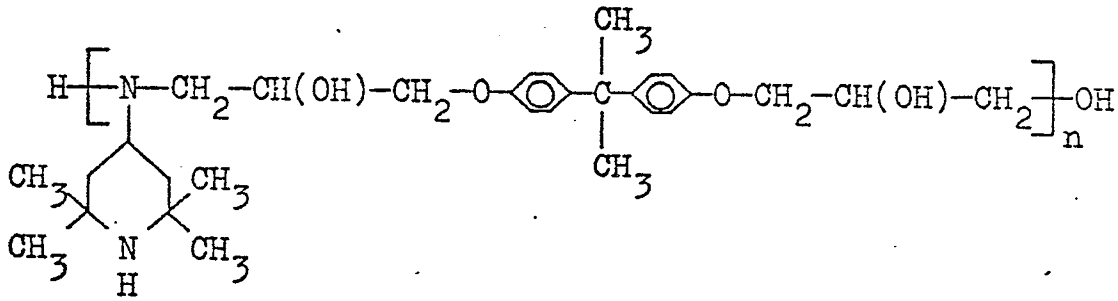

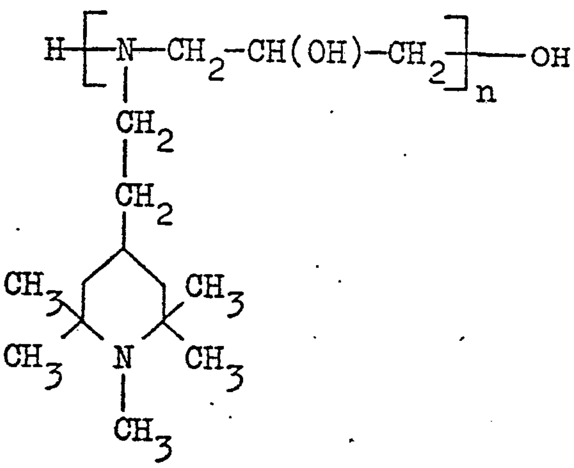

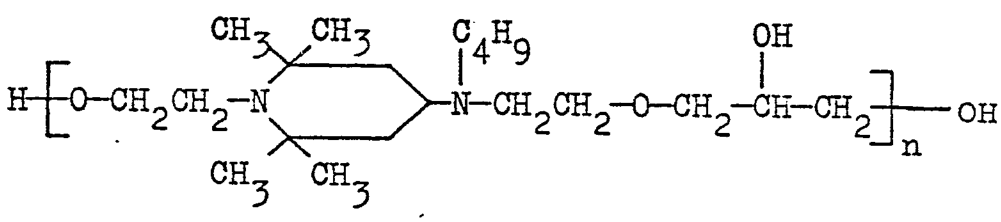

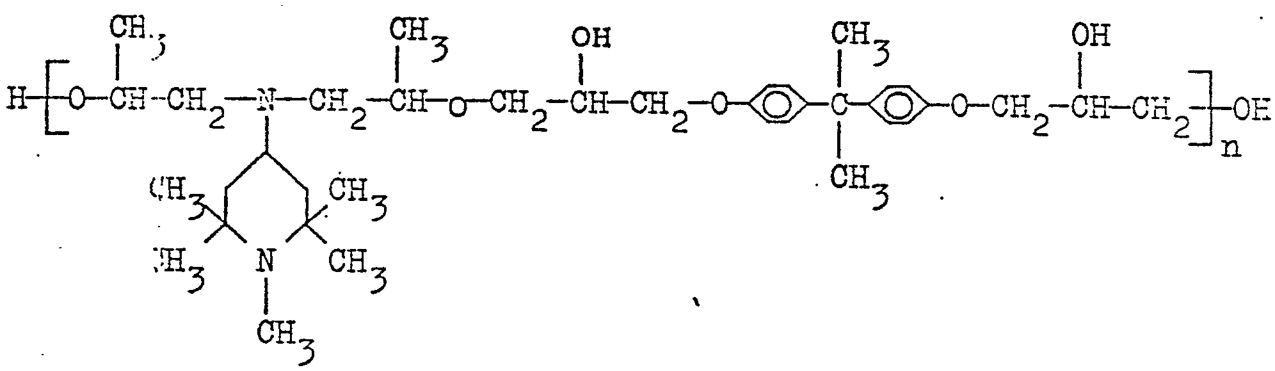

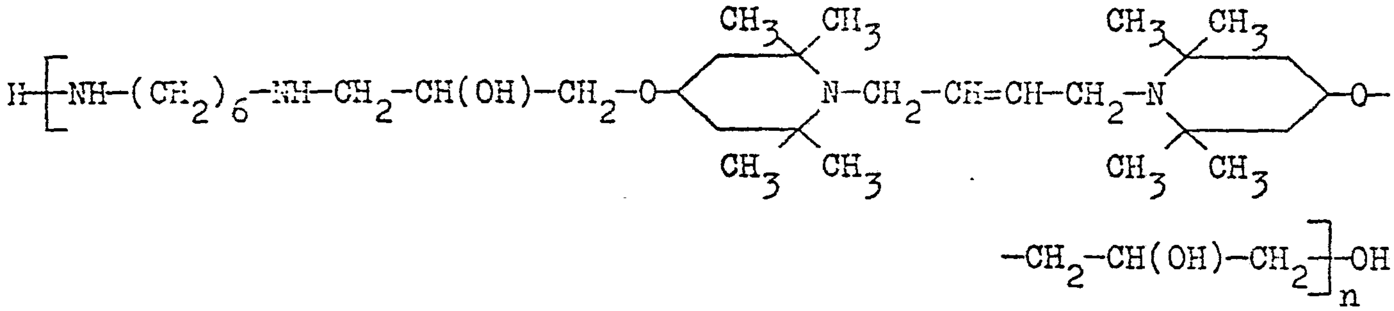

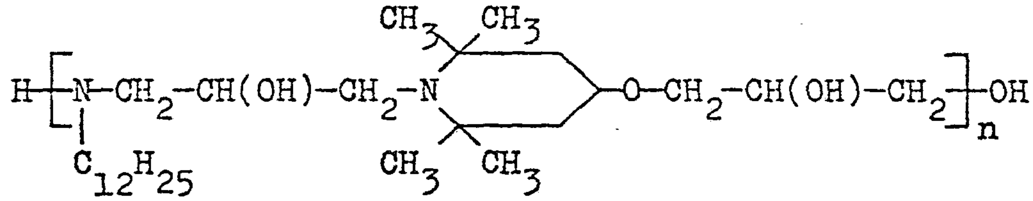

Die Herstellung solcher Kondensations- oder Additionspolymeren wie den vorhin aufgeführten Beispielen geschieht nach den üblichen Methoden der Polykondensation oder Polyaddition, beispielsweise durch Reaktion von zwei difunktionellen Komponenten wie z.B. einer Dicarbonsäure mit einem Diol oder einem Diamin. Zur Einkomponenten-Polykondensation eignen sich Komponenten mit zwei verschiedenen funktionellen Gruppen wie z.B. Aminocarbonsäuren oder Hydroxycarbonsäureester. Auch die ringöffnende Polymerisation führt zu denselben Typen von Polymeren, (Polyestern, Polyamide, Polyäther), beispielsweise die Polymerisation von Lactonen, Lactamen oder von Ringäthern. Diese Methoden zur Herstellung von Polymeren sind allgemein bekannt und es bedarf keiner Abänderung der Methoden, wenn man mit Polyalkylpiperidinderivaten als Monomeren arbeitet.

Auch die Polymerisation ungesättigter Polyalkylpiperidinverbindungen verläuft nach den bekannten Methoden, beispielsweise durch radikalische, anionische oder kationische Initiierung. Vorwiegend arbeitet man mit radikalischer Initiierung unter Verwendung von Initiatoren wie z.B. Azoisobutyronitril, Dibenzoylperoxid oder Redox-Systemen.

Beispiele von ungesättigten Polyalkylpiperidinderivaten, die sich polymerisieren lassen und deren Polymerisate sich als Komponente a) erfindungsgemäss verwenden lassen, sind die folgenden:

- 1-Methacryloyloxyäthyl-2,2,6,6-tetramethyl-piperidin
- 1-Acryloyloxyäthyl-2,2,6,6-tetramethyl-piperidin
- 1,2,2,6,6-Pentamethyl-4-maleinimido-piperidin
- 1-Acetyl-2,2,6,6-tetramethyl-4-maleinimido-piperidin
- 1-Benzyl-2,2,6,6-tetramethyl-4-maleinimido-piperidin
- 1,3,8-Triaza-2,4-dioxo-3-acryloyl-oxyäthyl-7,7,8,9,9-pentamethyl-spiro-[4,5]-decan
- 1,3,8-Triaza-2,4-dioxo-3-methacryloyl-oxyäthyl-7,7,8,9,9-pentamethyl-spiro-[4,5]-decan
- 1,3,8-Triaza-2,4-dioxo-3-n-dodecyl-7,7,9,9-tetramethyl-8-methacryloyl-oxyäthyl-spiro-[4,5]-decan
- 1,3,8-Triaza-2,4-dioxo-3-methacryloyl-oxyäthyl-7,7,9,9-tetramethyl-8-benzyl-spiro-[4,5]-decan
- 1,3,8-Triaza-2,4-dioxo-3-n-butyl-7,7,9,9-tetramethyl-8-acryloyl-oxyäthyl-spiro-[4,5]-decan
- 1-Benzyl-2,2,6,6-tetramethyl-4-(N-n-butyl)-methacrylamido-piperidin
- 1,2,2,6,6-Pentamethyl-4-(N-benzyl)-acrylamido-piperidin
- 1,2,2,6,6-Pentamethyl-4-(N-n-propyl)-acrylamido-piperidin
- 1,2,2,6,6-Pentamethyl-4-(N-n-propyl)-methacrylamido-piperidin
- 1-Allyl-2,2,6,6-tetramethyl-4-acryloyloxy-piperidin
- 1-Allyl-2,2,6,6-tetramethyl-4-methacryloyloxy-piperidin
- 1,2,2,6,6-Pentamethyl-4-acrylamido-piperidin

- 1-Benzyl-2,2,6,6-tetramethyl-4-(N-n-butyl)-acrylamido-piperidin
- 1-Benzyl-2,2,6,6-tetramethyl-4-acrylamido-piperidin
- 1-[3'-Acryloyloxy-(2'-hydroxy)-propyl]-2,2,6,6-tetramethyl-piperidin.

Solche ungesättigten Polyalkylpiperidinverbindungen können mit anderen ungesättigten Monomeren copolymerisiert werden. Hierzu eignen sich beispielsweise ungesättigte Ester wie z.B. Methylacrylat, Butylacrylat, 2-Hydroxyäthyl-acrylat, Methylmethacrylat, Diäthylfumarat, Aethylcrotonat oder Dimethylmaleinat; oder ungesättigte Amide wie z.B. N-Dibutyl-acrylamid, N-Hydroxyäthyl-acrylamid, Methacrylsäure-diäthanolamid oder Crotonsäureamid. Weiter geeignete Comonomere sind z.B. Acrylnitril, Methacrylnitril, Styrol, α-Methylstyrol, N-Vinylpyrrolidon, Vinylacetat, Vinylpropionat, Isopropyl-vinyläther oder N-Butyl-maleinimid. Das Molverhältnis von Piperidinkomponente und Comonomer soll mindestens 1:10 betragen, bevorzugt sind Copolymere, die mindestens 25 Mol-% der Piperidinkomponente enthalten. In kleinen Mengen können auch zweifach ungesättigte Monomere mitverwendet werden wie z.B. Divinylbenzol, Aethylenglykoldimethacrylat oder Methylen-bisacrylamid. Solche Comonomere bewirken eine teilweise Vernetzung und sollen nur in einer Menge von höchstens 5 Mol-%, vorzugsweise unterhalb 1 Mol-% enthalten sein.

Alle diese piperidinhaltigen Polymeren der Komponente a) wirken für sich allein bereits als Lichtschutzmittel für Kunststoffe, durch den Zusatz der Komponente b) wird ihre Wirkung jedoch noch stark erhöht. Diese Wirkungserhöhung kann bei einigen Polymeren bereits mit kleinen Mengen des Zusatzes von b) deutlich erkennbar werden, bei anderen Polymeren tritt dieser Effekt erst bei höheren Zusatzmengen auf. Mit anderen Worten: das optimale Verhältnis von a) zu b) kann nicht vorausgesagt werden, es muss in jedem einzelnen Fall experimentell bestimmt werden.

Es ist möglich, dass sich das Metallatom der Komponente b) an das Piperidin-Stickstoff-Atom der Komponente a) koordinativ anlagert. Ein exakter Nachweis hierfür ist schwierig, weil die Polymeren keine einheitlichen Verbindungen sind. Wenn man versucht, ein solches koordinatives Addukt von a) und b) vorzubilden, indem man beide Komponenten verschmilzt oder aus gemeinsamer Lösung eindampft, so ist die stabilisierende Wirkung eines solchen vorgebildeten Adduktes die gleiche wie die eines einfachen Gemisches. Dies kann natürlich auch darauf beruhen, dass während der Einarbeitung in den Kunststoff, die üblicherweise bei relativ hohen Temperaturen erfolgt, eine solche Addukt-Bildung ganz oder teilweise erfolgt.

Die erfindungsgemässen Gemische können daher in beliebiger Form erzeugt werden. Die einfachste Weise ist das Mischen beider Komponenten in Pulver-Form. Weiterhin kann eine Komponente in gelöster Form auf die andere Komponente in Pulverform aufgesprüht werden und das Lösungsmittel verdampft werden. Oder man mischt die Einzelkomponenten in Lösung und verdampft das Lösungsmittel. Beispiele für geeignete Lösungsmittel sind Toluol, Xylol, Aethanol,

Isopropanol, Chloroform oder Acetonitril. Schliesslich kann das Mischen auch erst im zu stabilisierenden Kunststoff erfolgen, indem man diesem die Komponenten a) und b) getrennt zugibt, beispielsweise während eines Granulierprozesses.

Gegenüber den aus der DT-OS 2 625 867 bekannten Metallkomplexen von monomeren Polyalkylpiperidinderivaten haben die erfindungsgemässen Gemische von polymeren Piperidinderivaten und Metallverbindungen den Vorteil einer höheren Extraktions- und Migrationsbeständigkeit in Kunststoffen. Dieser Vorteil ist insoweit überraschend als beim Uebergang von monomeren zu polymeren Kunststoff-Additiven deren Löslichkeit im Kunststoff sinkt, was üblicherweise einen starken Rückgang der Verträglichkeit im Kunststoff zu Folge hat. Demgegenüber zeigen die erfindungsgemässen Gemische eine überraschend gute Verträglichkeit in den üblichen Kunststoffen und es tritt bei den praktisch üblichen Zusatzkonzentrationen kein Ausblühen auf.

Kunststoffe, die durch Zusatz der erfindungsgemässen Gemische stabilisiert werden können, sind z.B. die folgenden:

1. Polymere von Mono- und Diolefinen, beispielsweise Polyäthylen (das gegebenenfalls vernetzt sein kann), Polypropylen, Polyisobutylen, Polymethylbuten-1, Polymethylpenten-1, Polyisopren oder Polybutadien.

2. Mischungen der unter 1) genannten Polymeren, z.B. Mischungen von Polypropylen mit Polyäthylen oder mit Polyisobutylen. Oder z.B. Mischungen von zwei Polyäthylenen von unterschiedlicher Dichte oder von unterschiedlichem Schmelzindex.

3. Copolymere von Mono- und Diolefinen, wie z.B. Aethylen-Propylen-Copolymere, Propylen-Buten-1-Copolymere, Propylen-Isobutylen-Copolymere, Aethylen-Buten-1-Copolymere sowie Terpolymere von Aethylen mit Propylen und einem Dien, wie Hexadien, Dicyclopentadien oder Aethylidennorbonen.

4. Polystyrol.

5. Copolymere von Styrol oder α-Methylstyrol mit Dienen oder Acrylderivaten, wie z.B. Styrol-Butadien, Styrol-Acrylnitril, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Aethylen-Propylen-Dien-Terpolymeren; sowie Block-Copolymere des Styrols, wie z.B. Styrol-Butadien-Styrol, Styrol-Isopren-Styrol oder Styrol-Aethylen/Butylen-Styrol.

6. Graft- oder Pfropfcopolymere von Styrol, wie z.B. Styrol auf Polybutadien, Styrol und Acrylnitril auf Polybutadien sowie deren Mischungen mit den unter 5) genannten Copolymeren, wie sie als sogenannte ABS-Polymere bekannt sind.

7. Halogenhaltige Polymere, wie z.B. Polyvinylchlorid, Polyvinylidenchlorid, Polyvinylfluorid, Polychloropren, Chlorkautschuke und Copolymere wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitril.

9. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyrat, Polyallylphthalat, Polyallylmelamin und deren Copolymere mit anderen Vinylverbindungen, wie Aethylen/Vinylacetat-Copolymere.

10. Homo- und Copolymere von Epoxyden, wie Polyäthylenoxyd, Polypropylenoxyd oder deren Copolymere mit Bisgycidyläthern.

11. Polyacetale, wie Polyoxymethylen, sowie solche Polyoxymethylene, die als Comonomeres Aethylenoxyd enthalten.

12. Polyphenylenoxyde.

13. Polyurethane und Polyharnstoffe.

14. Polycarbonate.

15. Polysulfone.

16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylol-cyclohexanterephthalat und Copolyäther-ester.

18. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

19. Alkydharze, wie Glycerin-Phthalsäure-Harze und deren Gemische mit Melamin-Formaldehydharzen.

20. Ungesättigte Polyesterharze, die sich von Copolyestern gesättigter- und ungesättigter Dicarbonsäuren mit mehrwertigen Alkoholen, sowie Vinylverbindungen als Vernetzungsmitteln ableiten, wie auch deren halogenhaltige, schwerbrennbare Modifikationen.

21. Vernetzte Epoxidharze, die sich von Polyepoxiden ableiten, z.B. von Bis-glycidyläthern oder von cycloaliphatischen Diepoxiden.

22. Natürliche Polymere, wie Cellulose, Gummi, Proteine, sowie deren polymerhomolog chemisch abgewandelte Derivate, wie Celluloseacetate, -propionate und -butyrate, bzw. die Celluloseäther, wie Methylcellulose.

Von diesen Polymeren sind die Gruppen 1-6, 13 und 16 hervorzuheben, da in diesen Substraten die erfindungsgemässen Stabilisatoren eine besonders markante Wirkung haben.

Die erfindungsgemässen Stabilisatorgemische werden den Kunststoffen in einer Menge von 0,005 bis 5 Gew.-%, berechnet auf das zu stabilisierende Material, zugesetzt. Vorzugsweise werden 0,01 bis 1 Gew.-%, insbesondere 0,02 bis 0,5 Gew.-% verwendet.

Der Zusatz zum Kunststoff kann nach den für Kunststoff-Zusätzen üblichen Methoden geschehen, beispielsweise durch Mischen in Pulverform oder durch Zusatz zur Kunststoffschmelze oder in eine Lösung des Kunststoffes oder seiner löslichen Vorprodukte. Der Zusatz der Stabilisatoren kann auch in Form eines Masterbatch geschehen, der diese beispielsweise in einer Konzentration von 5-25 Gew.-% enthält.

Der so stabilisierte Kunststoff kann ausserdem noch andere Stabilisatoren oder sonstige in der Kunststofftechnologie übliche Zusätze enthalten, wie sie beispielsweise in der DT-OS 2 349 962, Seite 25-32, aufgeführt sind.

Bei der Mitverwendung bekannter Stabilisatoren können synergistische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die nachfolgenden Beispiele erläutern die Erfindung noch näher, ohne sie zu begrenzen. Darin sollen unter Teilen Gewichtsteile und unter Prozenten Gewichtsprozente gemeint sein; die Temperaturen sind in Celsius-Graden angegeben.

## Beispiel 1

**Herstellung von erfindungsgemässen Gemischen durch Vermischen der Komponenten in Lösung.**

A) 10,6 g eines Polyamins der Formel

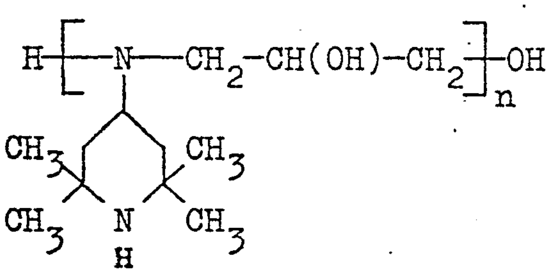

das durch Umsetzung von 4-Amino-2,2,6,6-tetramethylpiperidin mit 1 Mol-Aequivalent Epichlorhydrin in Gegenwart von Natro lauge hergestellt wurde und für das durch Gelchromatographie ei Molekulargewicht von 890 ermittelt wurde, werden in 250 ml Toluol gelöst. Diese Lösung wird mit einer Lösung von 8,15 g Nickel-oenanthat-semihydrat-$(C_6H_{13}COO)_2Ni \cdot {}^1/2\ H_2O$ - in 100 ml Toluol vermischt. Die Toluollösung wird eingedampft und der Rückstand im Vakuum (11 mm Hg) bei 60° getrocknet. Man erhält das wasserfreie Gemisch der beiden Komponenten als hellgrünes Pulver, das in heissem Ligroin oder Toluol löslich ist. Es enthält gemäss Analyse 8,2% Nickel, was einem Gewichtsverhältnis von Piperidinpolymer: Metallverbindung von 56:44 entspricht bzw. einem Gehalt von etwa 0,5 Mol Nickelsalz pro Mol Piperidinrest. (Gemisch Nr. A-1).

In analoger Weise wurden von demselben Polymeren die folgenden Gemische hergestellt.

Tabelle 1

| Gemisch Nr. | Metallverbindung | Molverhältnis Metall:Piperidinrest |
|---|---|---|
| A-2 | $(CH_3COO)_2Ni$ | 1:2 |
| A-3 | $(CH_3COO)_2Ni$ | 1:4 |
| A-4 | $(C_6H_{13}COO)_2Zn$ | 1:2 |
| A-5 | $(C_6H_{13}COO)_2Zn$ | 1:4 |
| A-6 | Ni-II-acetylacetonat | 1:1 |
| A-7 | Ni-II-acetylacetonat | 2:1 |

B) Ein Polyester der Formel

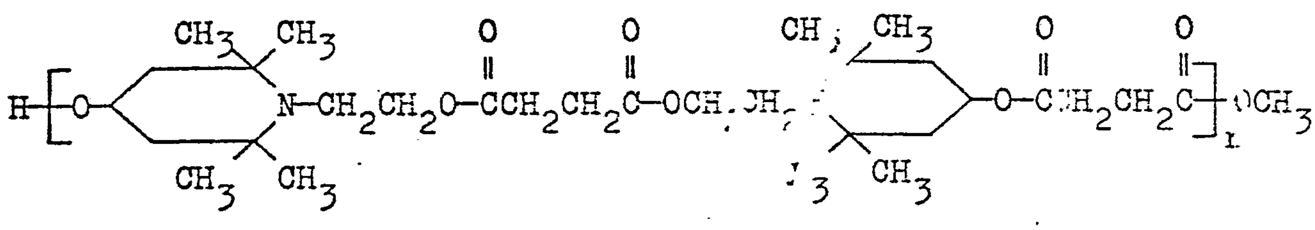

hergestellt aus Dimethylsuccinat und 1-β-Hydroxyäthyl-4-hydroxy-2,2,6,6-tetramethylpiperidin wurde wie unter A) beschrieben mit den in der folgenden Tabelle 2 aufgeführten Metallverbindungen gemischt.

Tabelle 2

| Gemisch Nr. | Metallverbindung | Molverhältnis Metall:Piperidinrest |
|---|---|---|
| B-1 | Ni-II-acetylacetonat | 1:2 |
| B-2 | Ni-II-acetylacetonat | 1:1 |

C) Ein Polyester der Formel

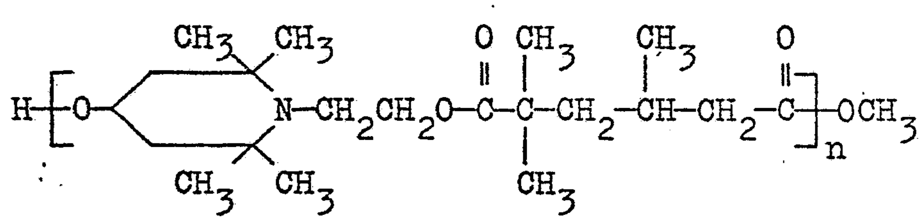

hergestellt aus Dimethyl-2,2,4-trimethyladipat und 1-β-Hydroxyäthyl-4-hydroxy-2,2,6,6-tetramethylpiperidin wurde mit den in der folgenden Tabelle 3 aufgeführten Metallverbindungen in Toluol-Lösung gemischt:

Tabelle 3

| Gemisch Nr. | Metallverbindung | Molverhältnis Metall:Piperidinrest |
|---|---|---|
| C-1 | $(C_6H_{13}COO)_2Ni$ | 1:1 |
| C-2 | Ni-II-acetylacetonat | 1:1 |

D) Ein Polyester der Formel

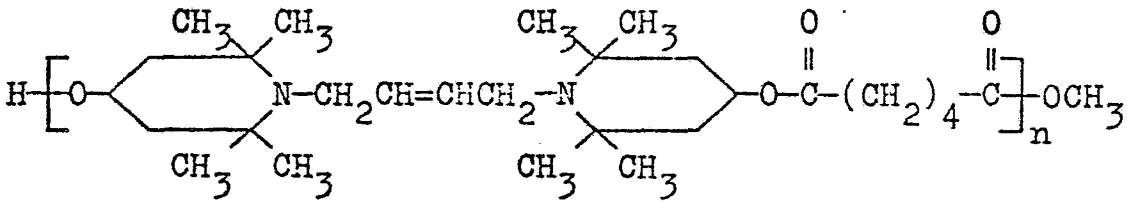

hergestellt aus Dimethyladipat und 1,4-Bis-(2,2,6,6-tetramethyl-4-hydroxypiperidinyl-1)-buten-2 wurde wie unter A) beschrieben mit den in der folgenden Tabelle 4 aufgeführten Metallverbindungen gemischt.

Tabelle 4

| Gemisch Nr. | Metallverbindung | Molverhältnis Metall:Piperidinrest |
|---|---|---|
| D-1 | Ni-II-acetylacetonat | 1:2 |
| D-2 | Ni-II-acetylacetonat | 1:1 |

E) Ein Polyaminotriazin der Formel

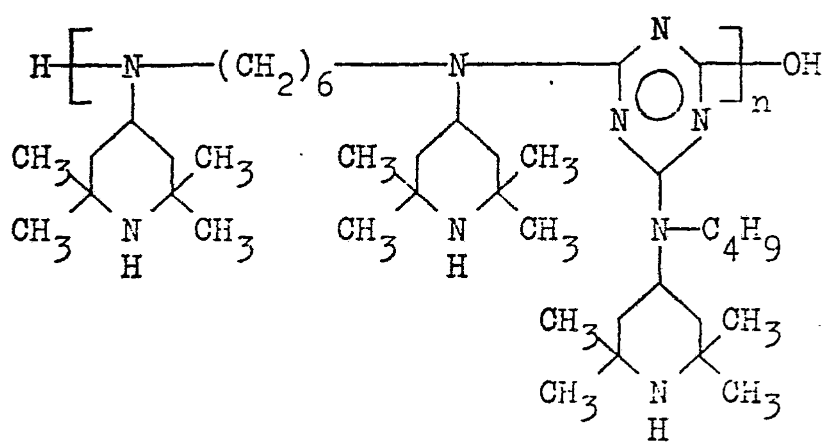

hergestellt aus 1-N-Butyl-(2,2,6,6-tetramethylpiperidin-4-amino)-3,5-dichlortriazin und 1,6-Bis-(2,2,6,6-tetramethyl-4-amino)-hexan wurde mit den in der folgenden Tabelle 5 aufgeführten Metallverbindungen in Toluol gemischt.

Tabelle 5

| Gemisch Nr. | Metallverbindung | Molverhältnis Metall-Piperidinrest |
|---|---|---|
| E-1 | Ni-II-acetylacetonat | 1:3 |
| E-2 | Ni-II-acetylacetonat | 2:3 |
| E-3 | $(C_6H_{13}COO)_2Ni$ | 1:3 |

F) Ein Polyester der Formel

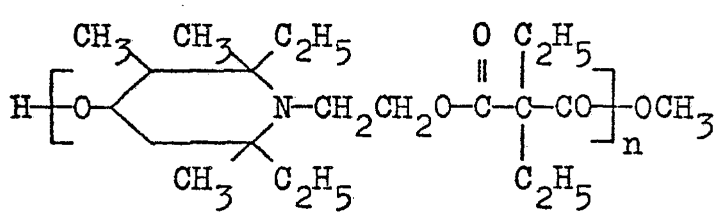

hergestellt aus Dimethyl-diäthylmalonat und 1-Hydroxyäthyl-2,3,6-trimethyl-2,6-diäthyl-4-hydroxypiperidin wurde mit den in der folgenden Tabelle 6 aufgeführten Metallverbindungen in Lösung gemischt.

Tabelle 6

| Gemisch Nr. | Metallverbindung | Molverhältnis Metall:Piperidinrest | Verwendetes Lösungsmittel |
|---|---|---|---|
| F-1 | Ni-II-acetylacetonat | 1:1 | Toluol |
| F-2 | $(C_6H_{13}COO)_2Ni$ | 1:1 | Toluol |
| F-3 | $(CH_3COO)_2Ni$ | 1:1 | Aethanol |
| F-4 | $(C_{11}H_{23}COO)_2Ni$ | 1:4 | Toluol |
| F-5 | Co-II-acetylacetonat | 1:4 | Toluol |

G) Ein Polyacrylat der Formel

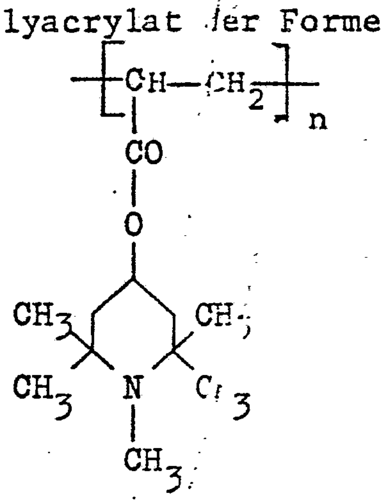

hergestellt durch radikalische Polymerisation von 1-Methyl-2,2,6,6-tetramethyl-4-acryloyloxypiperidin wurde mit den folgenden Metallverbindungen in Toluol vermischt.

Tabelle 7

| Gemisch Nr. | Metallverbindung | Molverhältnis Metall:Piperidinrest |
|---|---|---|
| G-1 | Ni-II-acetylacetonat | 1:1 |
| G-2 | $(C_6H_{13}COO)Ni$ | 1:1 |

In analoger Weise wurden die folgenden polymeren Polyalkylpiperidinverbindungen mit den von Tabelle 8 aufgeführten Metallverbindungen in Lösung vermischt:

H) Ein Polyester der Formel

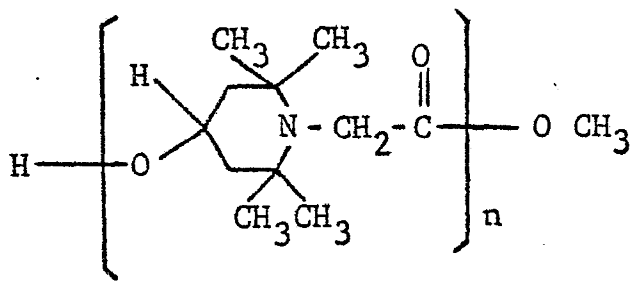

für den durch Gelchromatographie ein Molchulargewicht in den Grenzen von 800 bis 2000 ermittelt wurde.
(Tab. 8 : H-1,H-2)

J) Ein Polyester der Formel

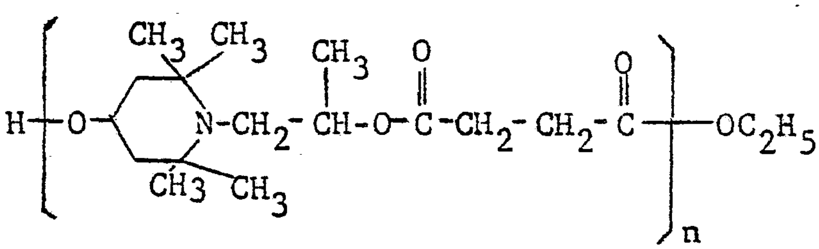

hergestellt aus Diäthylsuccinat und 1-(2'-Hydroxypropyl)-4-hydroxy-2,2,6,6-tetramethylpiperidin, mittleres Molekulargewicht ca. 4200. (Tab. 8: J-1, J-2)

K) Ein Polyester der Formel

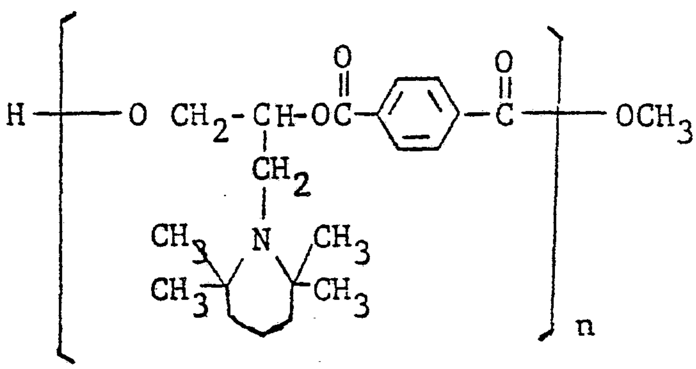

hergestellt aus Dimethyl-terephtalat und 1-(2',3'-Dihydroxypropyl)-2,2,6,6-tetramethylpiperdin, mittleres Molekulargewicht 2800. (Tab. 8: K-1)

L) Ein Polyester der Formel

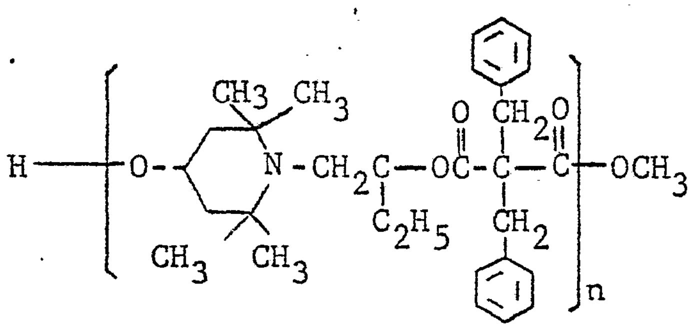

hergestellt aus Dimethyl-dibenzylmalonat und 1-(2'-Hydroxybutyl)-2,2,6,6-tetramethyl-4-hydroxypiperidin, mittleres Molekulargewicht 3060. (Tab. 8: L-1, L-2)

M) Ein Polyester der Formel

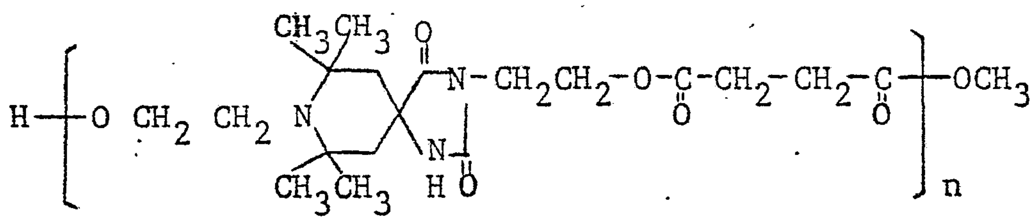

hergestellt aus Dimethylsuccinat und 3,8-Hydroxyäthyl-7,7,9,9-tetramethyl-1,3,8-triazaspiro (4.5)-decan-2,4-dion, mittleres Molekulargewicht 6300. (Tab. 8: M-1, M-2)

N) Ein Polyacrylat der Formel

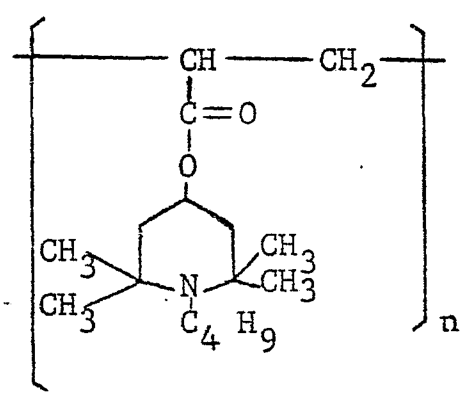

hergestellt durch radikalische Polymerisation von 1-n-Butyl-2,2,6,6-tetramethyl-4-acryloyloxypiperidin, mittleres Molekulargewicht 7000. (Tab. 8: N-1)

O) Ein Polyacrylat der Formel

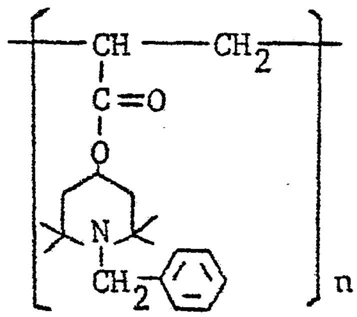

hergestellt durch radikalische Polymerisation von 1-Benzyl-2,2,6,6-tetramethyl-4-acryloyloxypiperidin, mittleres Molekulargewicht 9100. (Tab. 8: O-1)

P) Ein Polyacrylat der Formel

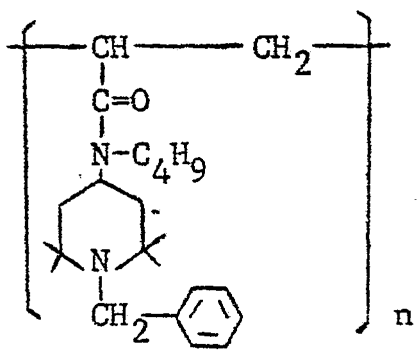

hergestellt durch radikalische Polymerisation von 1-Benzyl-2,2,6,6-tetramethyl-4-acryloyl-butylamidopiperidin, mittleres Molekulargewicht 12600. (Tab. 8: P-1)

Q) Ein Polyacrylat der Formel

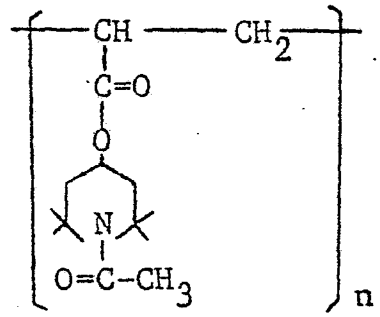

hergestellt durch radikalische Polymerisation von 1-Acetyl-2,2,6,6-tetramethyl-4-acryloyloxypiperidin, mittleres Molekulargewicht 6000. (Tab. 8: Q-1, Q-2)

R) Ein Polyacrylat der Formel

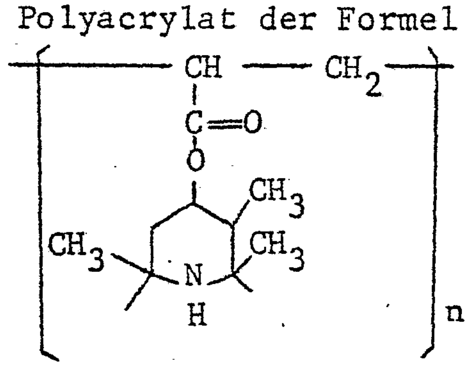

hergestellt durch radikalische Polymerisation von 2,3,6-Trimethyl-2,6-diäthyl-4-acryloyloxypiperidin, mittleres Molekulargewicht 10100.(Tab. 8: R-1)

S) Ein Polyamin der Formel

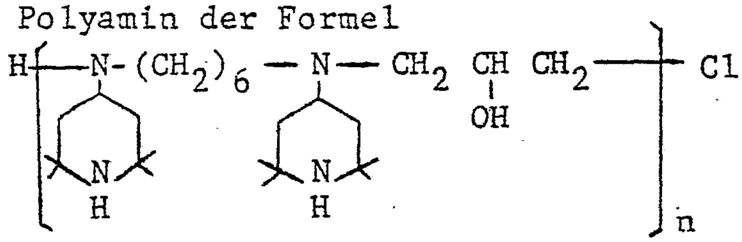

hergestellt durch Umsetzung von einem Mol N,N'-Bis(2,2,6,6-tetramethylpiperidin-4-yl) hexamethylendiamin mit einem Mol Epichlorhydrin, mittleres Molekulargewicht 2200. (Tab. 8: S-1, S-2, S-3).

0001840

T) Ein Polyamin der Formel

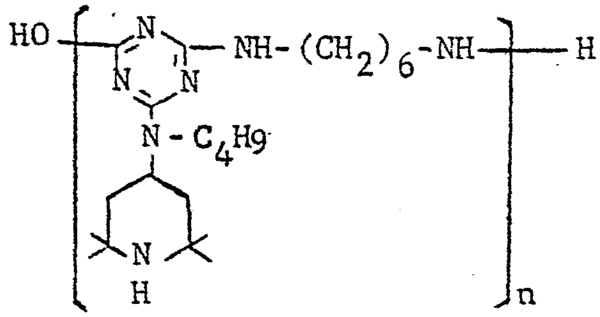

hergestellt durch Umsetzung von ein... Mol N,N'-Bis [2-chlor-4-butyl (2',2',6',6'-tetrame...piperidin-4-yl) amino-1,3,5-triazin-6-yl] hexame...endiamin mit einem Mol Hexamethylendiamin, mittleres Mo...kulargewicht 3260. (Tab. 8: T-1, T-2).

U) Ein Polyamid der Formel

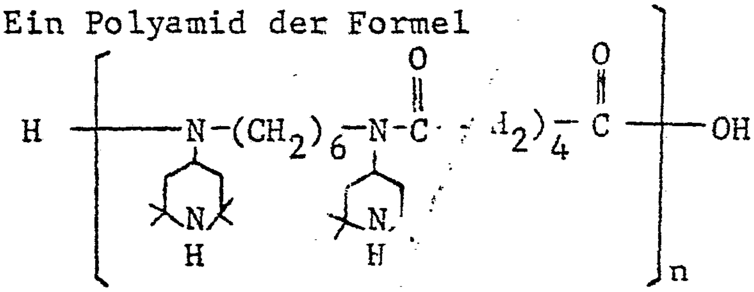

hergestellt durch Ums...ng von einem Mol N,N'-Bis (2,2,6,6-tetramethylpiperid...-yl)-hexamethylendiamin mit einem Mol Adipinsäurechlo... mittleres Molekulargewicht 3600. (Tab. 8: U-1, U-2).

V) Ein Polyami... Formel

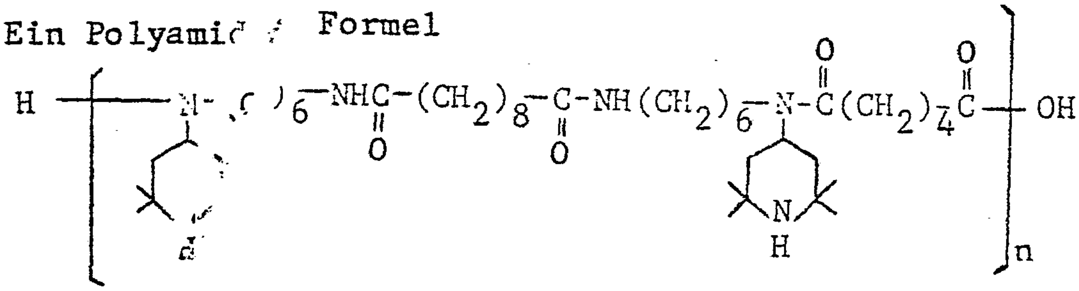

BAD ORIGINAL

hergestellt durch Polykondensation von einem Mol N,N'-Bis [6-(2,2,6,6-tetramethylpiperidin-4-yl) aminohexyl]-sebacinsäureamid mit einem Mol Adipinsäurechlorid. (Tab. 8: V-1, V-2).

W) Ein Polyharnstoff der Formel

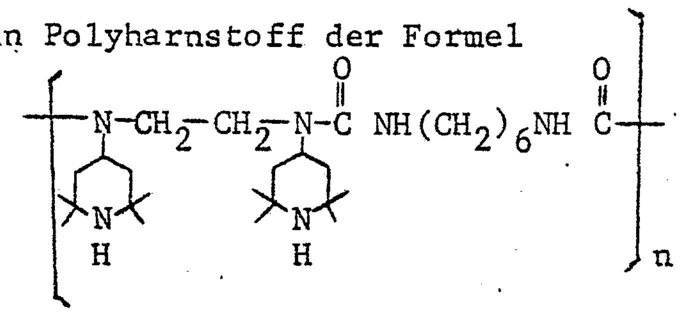

hergestellt durch Umsetzung von einem Mol N,N'-Bis (2,2,6,6-tetramethylpiperidin-4-yl)-äthylendiamin mit einem Mol Hexamethylendiisocyanat, mittleres Molekular gewicht 4100. (Tab. 8: W-1, W-2)

X) Ein Polycarbonat der Formel

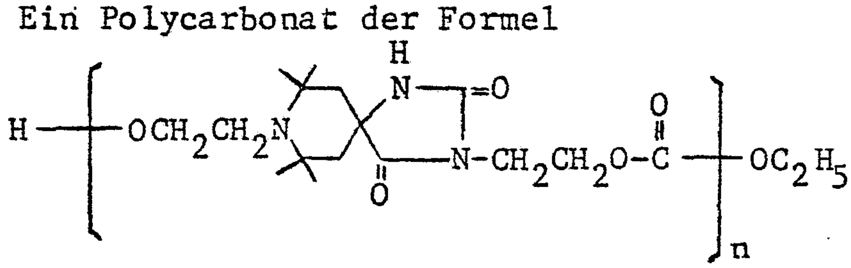

hergestellt durch Umsetzung von einem Mol 3,8-Di-(2'-äthoxycarbonyloxyäthyl)-7,7,9,9-tetramethyl-1,3,8-triazaspiro (4.5)-decan-2,4-dion mit einem Mol 3,8-(2'-Hydroxyäthyl)-7,7,9,9-tetramethyl-1,3,8-triazaspiro (4.5)-decan-2,4-dion, mittleres Molekulargewicht 4600. (Tab. 8: X-1, X-2).

Y) Ein Copolymerisat aus

Vinylcarbonitril und 1,2,2,6,6-Pentamethyl-4-acryloyloxypiperidin im molaren Verhältnis 1:1, mittleres Molekulargewicht 29000. (Tab. 8: Y-1)

0001840

Tabelle 8

| Gemisch Nr. | Metallverbindung | Molverhältnis Metall: Piperidinrest | verwendetes Lösungsmittel |
|---|---|---|---|
| H-1 | $(C_6H_{13}COO)_2Ni$ | 1 : 1 | Toluol |
| H-2 | Ni-II-acetyl-acetonat | 1 : 1 | Aethanol |
| J-1 | Ni-II-acetyl-acetonat | 1 : 2 | Aethanol |
| J-2 | $(C_{11}H_{23}COO)_2Ni$ | 1 : 2 | Toluol |
| K-1 | Ni-II-acetyl-acetonat | 1 : 2 | Aethanol/ Toluol (1:1) |
| L-1 | Ni-II-acetyl-acetonat | 1 : 2 | Aethanol/ Toluol (1:1) |
| L-2 | 1:2 Ni(II)-Chelat des 2-Benzoyl-5-n-octyloxyphenols | 1 : 2 | Toluol |
| M-1 | Ni-II-acetyl-acetonat | 1 : 2 | Aethanol/ Chloroform (1 : 4) |
| M-2 | 1:2 Ni(II)-Chelat des 1,2,2,6,6-Pentamethyl-4(1',3'-dioxobutyloxy)piperidin-Enolates | 1 : 2 | Chloroform |
| N-1 | Ni-II-acetylacetonat | 1 : 2 | Aethanol/ Toluol (1:1) |
| O-1 | Ni-II-acetylacetonat | 1 : 2 | Aethanol/ Toluol (1:3) |
| P-1 | Ni-II-acetylacetonat | 1 : 2 | Aethanol/ Toluol (1:1) |
| Q-1 | Ni-II-acetylacetonat | 1 : 1 | Aethanol/ Toluol (1:3) |
| Q-2 | 1:2 Ni-II-Chelat des 1,2,2,6,6 Pentamethyl-4 [N-heptyl-N-(1',3'-dioxobutyl)]-amino-piperidin- Enolats | 1 : 1 | Toluol |

Fortsetzung Tabelle 8

| Gemisch Nr. | Metallverbindung | Molverhältnis Metall: Piperidinrest | verwendetes Lösungsmittel |
|---|---|---|---|
| R-1 | 1:2 Ni(II) Chelat des 1-Phenyl-3-methyl-4-decanoyl-pyrazolon-Enolates | 1 : 2 | Toluol |
| S-1 | Ni-II-acetylacetonat | 1 : 2 | Aethanol |
| S-2 | $(C_6H_{13}COO)_2Ni$ | 1 : 2 | Toluol |
| S-3 | 1:2 Ni(II) Chelat des Pentyl-3-oxo-butanoates | 1 : 2 | Toluol |
| T-1 | Ni-II-acetylacetonat | 1 : 2 | Aethanol |
| T-2 | $(C_{11}H_{23}COO)_2Ni$ | 1 : 2 | Toluol |
| U-1 | Ni-II-acetylacetonat | 1 : 2 | Aethanol |
| U-2 | $(C_6H_{13}COO)_2Ni$ | 1 : 2 | Toluol |
| V-1 | Ni-II-acetylacetonat | 1 : 2 | Aethanol |
| V-2 | $(C_{11}H_{23}COO)_2Ni$ | 1 : 2 | Toluol |
| W-1 | Ni-II-acetylacetonat | 1 : 4 | Aethanol |
| W-2 | $(C_{11}H_{23}COO)_2Ni$ | 1 : 4 | Toluol |
| X-1 | Ni-II-acetylacetonat | 1 : 2 | Chloroform/Aethanol(3:1) |
| X-2 | $(C_{11}H_{23}COO)_2Ni$ | 1 : 2 | Chloroform/Toluol (4:1) |
| Y-1 | Ni-II-acetylacetonat | 1 : 2 | Aethanol/Toluol (1:3) |

Beispiel 2

Lichtschutz von Polypropylen - Bändchen

100 Teile Polypropylenpulver (Schmelzindex 1,5g/10 Minuten, 230°C, 2160 g Belastung) wurden in einem Trommelmischer mit 0,1 Teil Pentaerythrit-tetrakis [3-(3'5'ditertiär-butyl-4-hydroxyphenyl)-propionat] und 0,15 Teile der in der nachfolgenden Tabelle angeführten Lichtschutzmittel in den angegebenen Konzentrationen gemischt und in einem Extruder bei 200 - 220°C extrudiert und granuliert. Das erhaltene Granulat wurde in üblicher Weise mittels eines Extruders mit Breitschlitzdüse zu Folien, verarbeitet, die in Bändchen geschnitten wurden, welche anschliessend bei erhöhter Temperatur auf die sechsfache Länge verstreckt wurden. Der Titer dieser Bändchen betrug 700-900 den, ihre Breite 4 mm ihre Reissfestigkeit 5,5-6,5 g/den.
Diese Bändchen wurden in einem Xenotest 1200 belichtet. In regelmässigen Abständen wurden Proben einem Zug-Dehnungsversuch unterworfen, wobei sich mit zunehmender Belichtung eine fortschreitende Abnahme der Reissfestigkeit ergibt. Die Belichtungszeit bis zum Abfall der Reissfestigkeit auf die Hälfte des Ausgangswertes wird durch die Wirkung der Lichtschutzmittel verlängert.

Tabelle 9

| Lichtschutzmittel | Belichtungszeit bis 50% Reissfestigkeit |
|---|---|
| keines | 480h |
| A - 1 | 4820h |
| A - 2 | 5980h |
| A - 3 | 5700h |
| A - 4 | 3920h |
| A - 5 | 5960h |
| A - 6 | 5000h |
| A - 7 | 4560h |
| B - 1 | 1530h |
| B - 2 | 1430h |
| C - 1 | 1120h |
| G - 1 | 1200h |
| G - 2 | 1320h |

## Patentansprüche

1. Stabilisatorgemisch aus

a) einem Polymeren, das in beliebiger Form chemisch gebundene Polyalkylpiperidinreste enthält, und

b) einer Metallverbindung der Formel $MeL_w$, worin Me ein zwei- oder dreiwertiges Metallion oder ein zweiwertiges Oxometallion oder ein zweiwertiges Dialkylzinn-ion ist, L das einwertige Anion einer Carbonsäure, einer Phosphinsäure oder eines Phosphonsäuremonoesters, die durch Hydroxyl, Aminogruppen oder Polyalkylpiperidingruppen substituiert sein können, oder ein Enolation der Formel VI

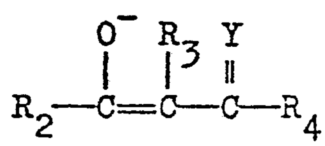

VI

darstellt, worin Y Oxo oder gegebenenfalls substituiertes Imino ist, $R_2$ Alkyl, Alkenyl, Cycloalkyl, Aralkyl, Aryl oder substituiertes Aryl ist, $R_3$ Wasserstoff, Alkyl, Alkenyl, Cycloalkyl, Aralkyl, Aryl, Alkoxycarbonyl oder Alkoxycarbonylalkyl ist, oder $R_2$ und $R_3$ zusammen gegebenenfalls substituiertes 1,4-Buta-1,3-dienylen oder 1,4-Butylen ist, oder $R_2$ und $R_3$ zusammen eine Gruppe der Formel VIa darstellen,

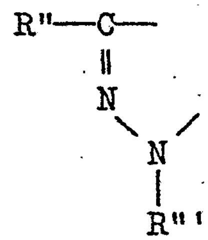

VIa

worin R'' Alkyl, Phenyl oder substituiertes Phenyl und R''' Phenyl oder Alkylphenyl darstellen, $R_4$ Alkyl, Alkenyl, Cycloalkyl, Aryl, Aralkyl, Alkoxy, eine primäre, sekundäre oder tertiäre Aminogruppe oder eine Gruppe -O-Pi oder $-NR_5$-Pi ist, worin $R_5$ Wasserstoff, Alkyl, Cycloalkyl oder Aralkyl und Pi einen Polyalkylpiperidinrest darstellt, und worin $R_2$, $R_3$ oder $R_4$ auch Alkyl, das durch einen Rest der Formeln -O-Pi, $-NR_5$-Pi, -COO-Pi oder $-CONR_5$-Pi substituiert ist, sein können und w 2 oder 3 ist, wobei das Gewichtsverhältnis der Komponente a) zur Komponente b) 99,9 zu 0,1 bis 10 zu 90 beträgt.

2. Stabilisatorgemisch gemäss Anspruch 1, dadurch gekennzeichnet, dass die Komponente a) aus einem Polymeren besteht, dessen wiederkehrende Struktureinheit mindestens einen Polyalkylpiperidinrest der Formel I oder II

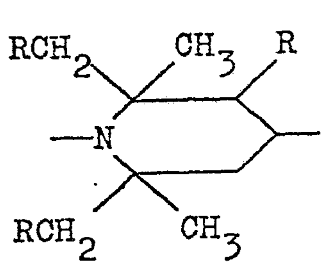

I

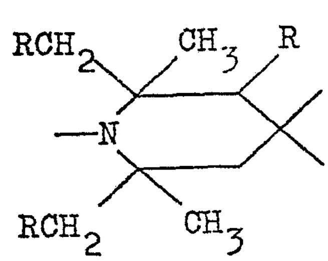

II

enthält oder durch eine Polyalkylpiperidin-Seitengruppe der Formel III, IV oder V

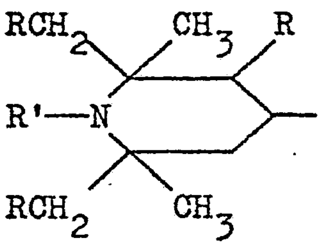
III

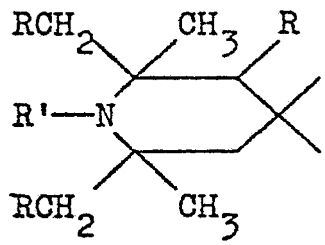
IV

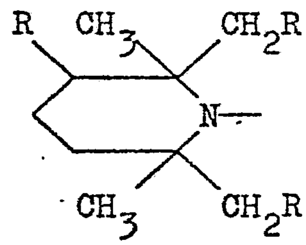
V

substituiert ist, worin R Wasserstoff oder $C_1$-$C_5$ Alkyl und R' Wasserstoff, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl oder $C_3$-$C_5$ Alkenoyl bedeutet, oder einem Mischpolymeren davon.

3. Stabilisatorgemisch gemäss Anspruch 2, dadurch gekennzeichnet, dass in der Metallverbindung der Formel $MeL_w$ das Kation Me eines aus der Reihe $Mg^{2+}$, $Ca^{2+}$, $Sr^{2+}$, $Ba^{2+}$, $Zn^{2+}$, $Cd^{2+}$, $Sn^{2+}$, $Al^{3+}$, $Cr^{3+}$, $Ni^{2+}$, $Co^{2+}$, $Mn^{2+}$, [illegible]$^{2+}$, $MoO^{2+}$ oder $(C_1$-$C_{12}$ Alkyl$)_2Sn^{2+}$ ist und der Ligand L das einwertige Anion einer aliphatischen, cycloaliphatischen, araliphatischen oder aromatischen Carbonsäure, Phosphinsäure oder eines Phosphonsäure-monoesters mit jeweils 2-22 C-Atomen darstellt, die unsubstituiert oder durch -OH, $-NH_2$, $-NHR_5$, $-NR_5R_6$ oder einen Rest der Formel -Pip, -O-Pip, $-NR_5$-Pip, -COOPip oder $-CONR_5$-Pip substituiert sind, wobei $R_5$ Wasserstoff, $C_1$-$C_{12}$ Alkyl, Cyclohexyl oder Benzyl und $R_6$ $C_1$-$C_{12}$ Alkyl, Cyclohexyl, Benzyl, $C_6$-$C_{10}$ Aryl oder $C_7$-$C_{12}$ Alkylphenyl bedeuten, oder wobei $R_5$ und $R_6$ zusammen 1,4-Butylen, 1,5-Pentylen oder 3-Oxa-1,5-pentylen darstellen, und wobei Pip einen Rest der Formel III oder Va darstellt,

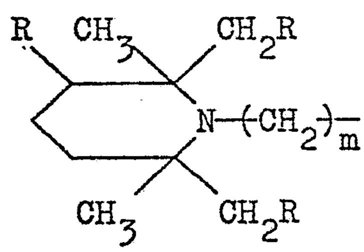

Va

worin m 1, 2 oder 3 ist, oder L ein Enolat-ion der Formel VI ist,

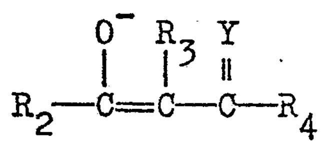

VI

worin Y Oxo oder eine Iminogruppe =NH oder $=NR_6$ darstellt, $R_2$ $C_1$-$C_{12}$ Alkyl, $C_3$-$C_6$ Alkenyl, $C_5$-$C_{12}$ Cycloalkyl, $C_7$-$C_{12}$ Aralkyl, $C_6$-$C_{10}$ Aryl oder durch $C_1$-$C_4$ Alkyl, Hydroxyl oder Halogen substituiertes Phenyl bedeutet, $R_3$ Wasserstoff, $C_1$-$C_{12}$ Alkyl, $C_3$-$C_6$ Alkenyl, $C_5$-$C_{12}$ Cycloalkyl, $C_7$-$C_{12}$ Aralkyl, Phenyl, $C_2$-$C_{13}$ Alkoxycarbonyl oder $C_3$-$C_{14}$ Alkoxycarbonylmethyl bedeutet, oder $R_2$ und $R_3$ zusammen einen unsubstituierten oder durch $C_1$-$C_4$ Alkyl oder Halogen substituierten 1,4-Buta-1,3-dienylen- oder 1,4-Butylenrest darstellen oder $R_2$ und $R_3$ zusammen einen Rest der Formel VIa darstellen,

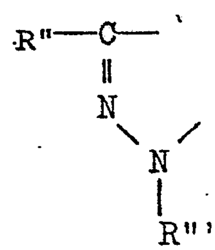

VIa

worin R'' $C_1$-$C_6$ Alkyl, Phenyl oder durch $C_1$-$C_8$ Alkyl und/ oder Hydroxyl substituiertes Phenyl und R''' Phenyl oder durch $C_1$-$C_4$ Alkyl substituiertes Phenyl bedeuten, und $R_4$ $C_1$-$C_{12}$ Alkyl, $C_3$-$C_6$ Alkenyl, $C_5$-$C_{12}$ Cycloalkyl, $C_7$-$C_{12}$ Aralkyl, Phenyl, $C_1$-$C_{12}$ Alkoxy, oder eine Gruppe der Formeln $-NH_2$, $-NHR_6$, $-NR_5R_6$, -O-Pip, $-NR_5$-Pip bedeutet und worin $R_2$, $R_3$ oder $R_4$ auch $C_1$-$C_4$ Alkyl, das durch einen Rest der Formel -O-Pip, $-NR_5$-Pip, -COO-Pip oder $-CONR_5$-Pip substituiert ist, sein können und w 2 oder 3 ist.

4. Gemisch gemäss Anspruch 1, dadurch gekennzeichnet, dass die Komponente a) einen Polyester, Polyäther, Polyharnstoff, ein Polyamid, Polyurethan, Polyamin oder Polyaminotriazin darstellt, welche Polyalkylpiperidinreste der Formeln I-V enthalten.

5. Gemisch gemäss Anspruch 1, dadurch gekennzeichnet, dass die Komponente a) ein Poly(meth)acrylat oder ein Poly(meth)acrylamid darstellt, das Polyalkylpiperidinreste der Formeln III-V enthält.

6. Gemisch gemäss Anspruch 2, dadurch gekennzeichnet, dass die Komponente a) in ihrer wiederkehrenden Struktureinheit einen Polyalkylpiperidinrest einer der Formeln VII bis XXVI enthält,

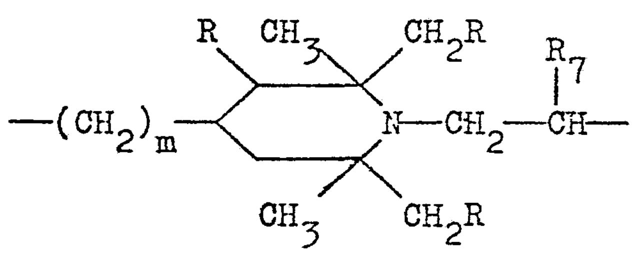

VII

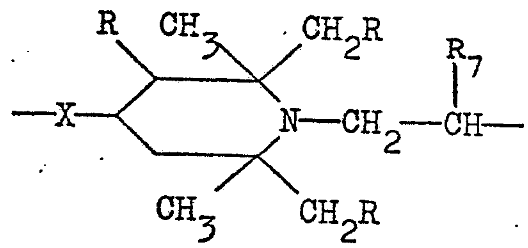

VIII

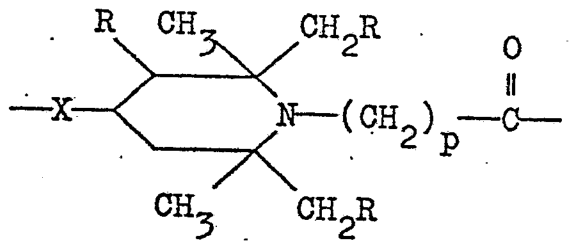

IX

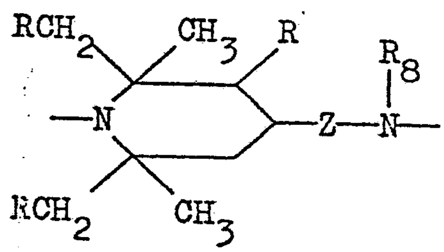

X

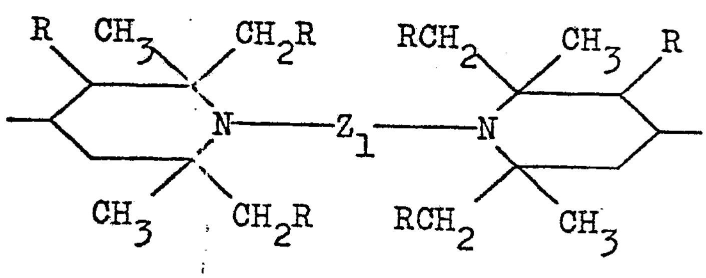

XI

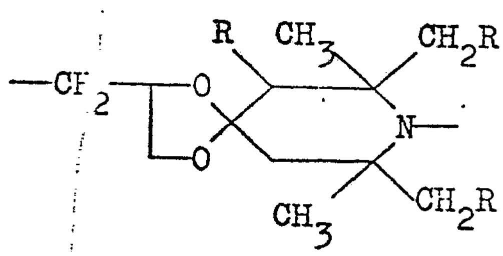

XII

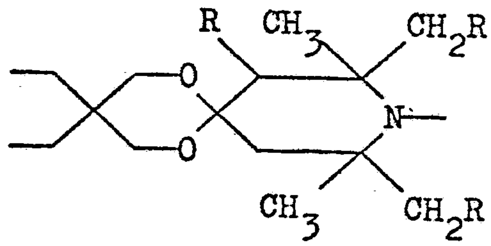

XIII

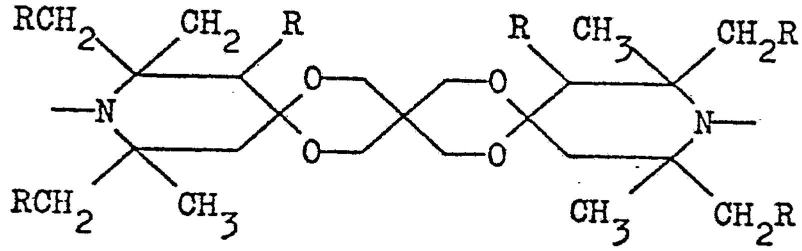

XIV

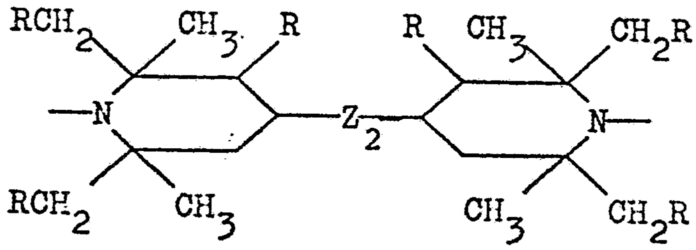

XV

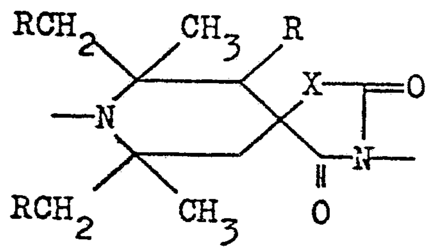

XVI

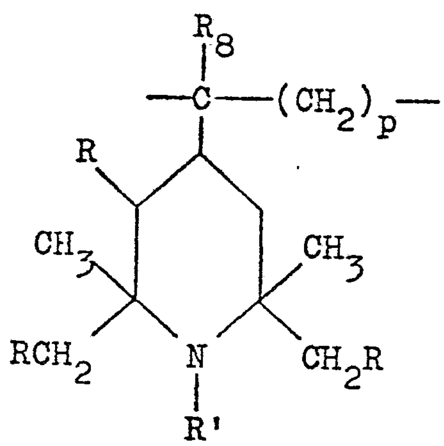

XVII

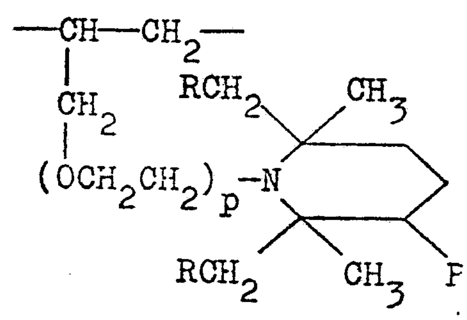

XVIII

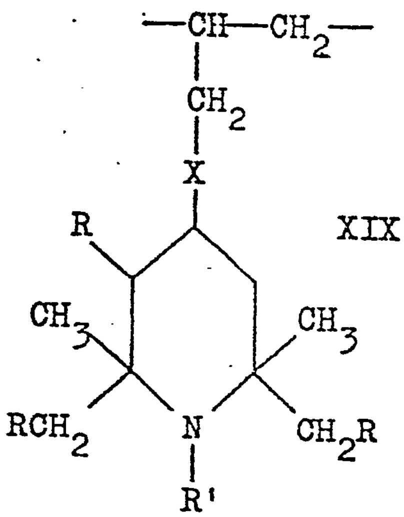

XIX

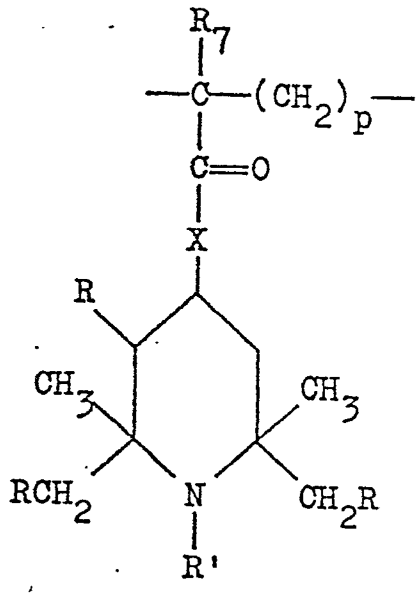

XX

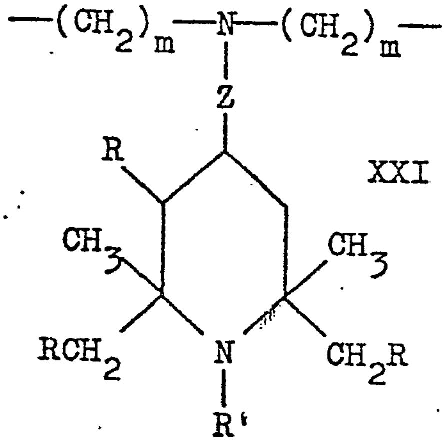

XXI

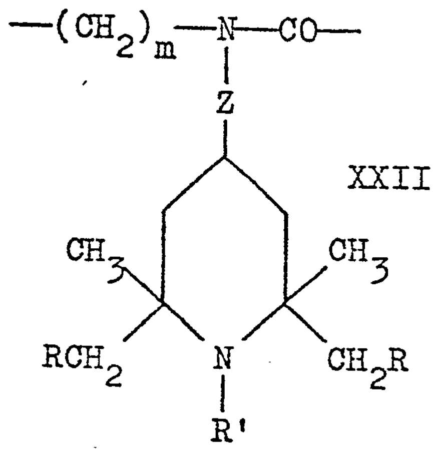

XXII

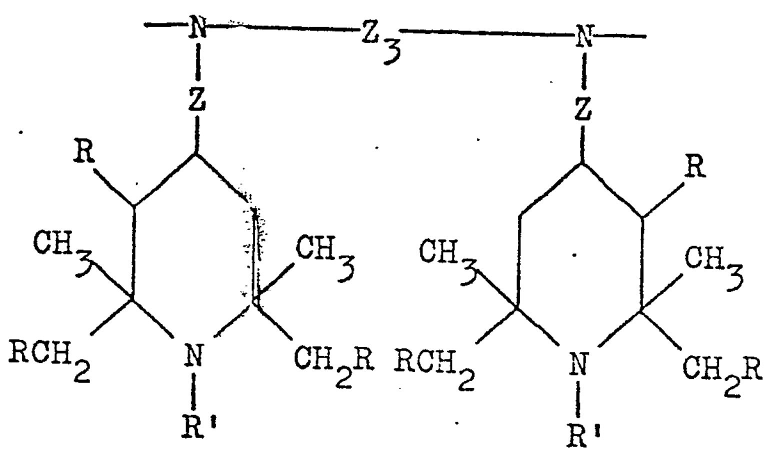

XXIII

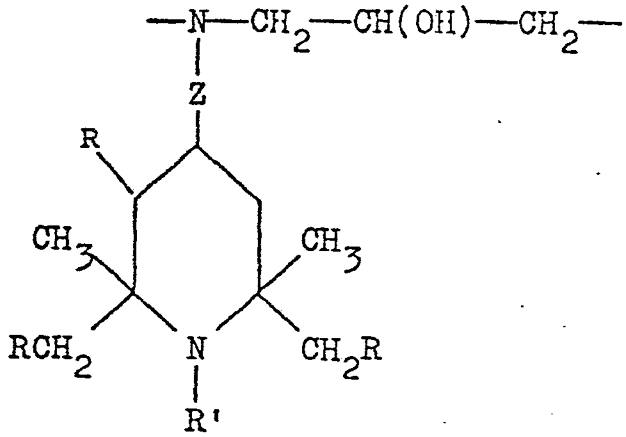

XXIV

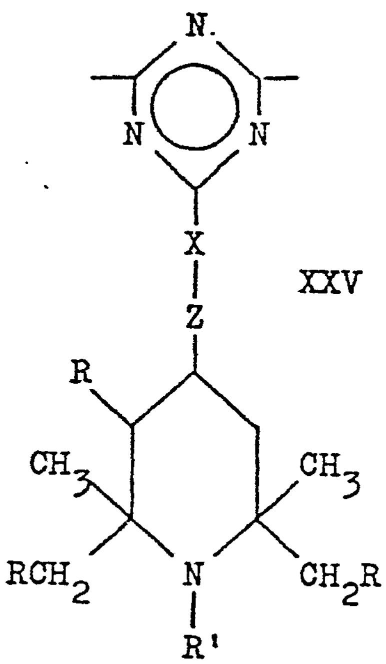

XXV

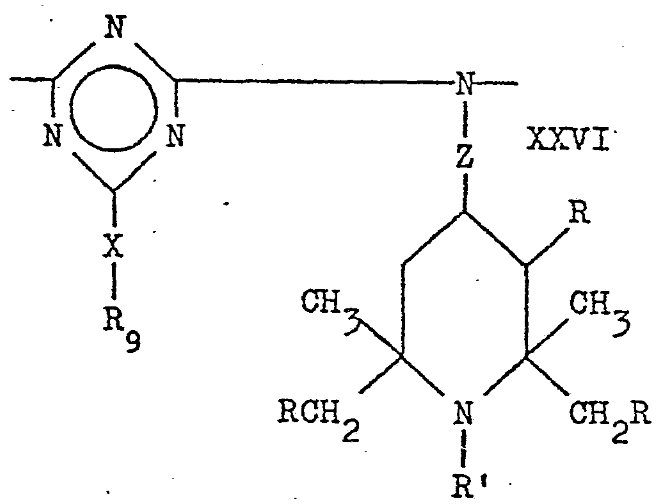

XXVI

worin

| | |
|---|---|
| R und R' | die in Anspruch 1 gegebene Bedeutung haben, |
| m | 1, 2 oder 3 ist |
| p | null oder 1 ist, |
| $R_7$ | Wasserstoff, Methyl oder Phenyl, |
| X | Sauerstoff oder $NR_8$, |
| $R_8$ und $R_9$ | unabhängig voneinander Wasserstoff, $C_1$-$C_{18}$ Alkyl, $C_5$-$C_{12}$ Cycloalkyl, $C_7$-$C_{11}$ Aralkyl oder Phenyl |
| Z | eine direkte Bindung oder eine Gruppe der Formel $-CH_2CH_2-$ oder $-OCH_2CH_2CH_2-$ |
| $Z_1$ | $C_4$-$C_8$ Alkylen, $C_4$-$C_8$ Alkenylen oder p-Xylylen |

$Z_2$ $C_4$-$C_{10}$ Alkylen, p-Xylylen, -CH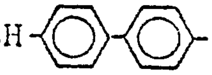-$CH_2$- oder
Acyl
-N-, worin Acyl $C_2$-$C_8$ Alkanoyl oder $C_3$-$C_5$ Alkenoyl bedeutet,

$Z_3$ $C_2$-$C_{12}$ Alkylen, $C_6$-$C_{12}$ Arylen, 4,4'-Dicyclohexylenmethan oder einen Rest der Formel Phenylen-$Z_4$-Phenylen und

$Z_4$ -$CH_2$-, $>C(CH_3)_2$, -O- oder -$SO_2$- bedeuten.

7. Gemisch gemäss Anspruch 2, dadurch gekennzeichnet, dass die Komponente a) in ihrer wiederkehrenden Struktureinheit einen Polyalkylpiperidinrest einer der Formeln I-V enthält, worin R Wasserstoff oder Methyl ist.

8. Gemisch gemäss Anspruch 7, worin R Wasserstoff ist.

9. Gemisch gemäss Anspruch 6, dadurch gekennzeichnet, dass die Komponente a) in ihrer wiederkehrenden Struktureinheit einen Polyalkylpiperidinrest einer der Formeln VII-XXVI enthält, worin R Wasserstoff oder Methyl ist.

10. Gemisch gemäss Anspruch 9, worin R Wasserstoff ist.

11. Gemisch gemäss Anspruch 1, dadurch gekennzeichnet, dass die Komponente a) ein Mischpolymer aus einer Polyalkylpiperidin-haltigen und einer Polyalkylpiperidin-freien Komponente ist.

12. Gemisch gemäss Anspruch 2, dadurch gekennzeichnet, dass die Komponente a) in ihrer wiederkehrenden Struktureinheit einen Polyalkylpiperidinrest der Formeln III oder IV enthält, worin R' Wasserstoff oder Methyl ist.

13. Gemisch gemäss Anspruch 6, dadurch gekennzeichnet, dass die Komponente a) in ihrer wiederkehrenden Struktureinheit einen Polyalkylpiperidinrest einer der Formeln XVII oder XIX-XXVI enthält und darin R' Wasserstoff oder Methyl ist.

14. Gemisch gemäss Anspruch 1, dadurch gekennzeichnet, dass die Komponente b) eine Metallverbindung der Formel $MeL_w$ ist, worin Me ein Kation aus der Reihe $Ni^{2+}$, $Co^{2+}$, $Zn^{2+}$, $Mg^{2+}$, $Ca^{2+}$ oder $Al^{3+}$ darstellt.

15. Gemisch gemäss Anspruch 1, dadurch gekennzeichnet, dass Me in der Formel $MeL_w$ Nickel oder Kobalt darstellt und w 2 ist.

16. Gemisch gemäss Anspruch 1, dadurch gekennzeichnet, dass die Komponente b) eine Metallverbindung der Formel $MeL_w$ ist, worin L das einwertige Anion einer aliphatischen Carbonsäure ist.

17. Gemisch gemäss Anspruch 1, dadurch gekennzeichnet, dass der Ligand L das Anion eines $\alpha$- oder $\beta$-Aminophosphonsäure-monoalkylesters ist.

18. Gemisch gemäss Anspruch 1, dadurch gekennzeichnet, dass der Ligand L ein Enolation der Formel VI ist, worin Y Oxo oder $=NR_6$ ist, $R_2$ $C_1$-$C_{12}$ Alkyl oder Phenyl und $R_3$ Wasserstoff ist oder $R_2$ und $R_3$ zusammen 1,4-Butadienylen darstellen, das durch Alkyl mit 1-4 C-Atomen substituiert sein kann, und worin $R_4$ $C_1$-$C_{12}$ Alkyl oder $C_1$-$C_{12}$ Alkoxy ist.

19. Gemisch gemäss Anspruch 1, dadurch gekennzeichnet, dass der Ligand L ein Enolation der Formel VI ist, worin Y Oxo darstellt.

20. Gemisch gemäss Anspruch 1, dadurch gekennzeichnet, dass der Ligand L das Anion von Acetylaceton ist.

21. Stabilisatorgemisch gemäss Anspruch 2, dadurch gekennzeichnet, dass die Komponente a) ein Polyester ist, dessen wiederkehrende Struktureinheit einen Polyalkylpiperidinrest der Formeln VIII, IX, XXI oder XXIII enthält, worin m 1 oder 2 ist, R und R' Wasserstoff oder Methyl sind und p, $R_7$, X, Z und $Z_3$ die in Anspruch 6 gegebene Bedeutung haben.

22. Gemisch gemäss Anspruch 2, dadurch gekennzeichnet, dass die Komponente a) ein Polyamid ist, dessen wiederkehrende Struktureinheit einen Rest der Formeln XV, XXI oder XXIII enthält, worin R und R' Wasserstoff oder Methyl sind und m, Z, $Z_2$ und $Z_3$ die in Anspruch 6 gegebene Bedeutung haben.

23. Gemisch gemäss Anspruch 2, dadurch gekennzeichnet, dass die Komponente a) ein Polyaminotriazin ist, dessen wiederkehrende Struktureinheit einen Rest der Formeln X, XXIII, XXV oder XXVI enthält, worin X $NR_8$ bedeutet, Z eine direkte Bindung ist, R und R' Wasserstoff oder Methyl bedeuten und $R_8$, $R_9$ und $Z_3$ die in Anspruch 6 gegebene Bedeutung haben

24. Gemisch gemäss Anspruch 2, dadurch gekennzeichnet, dass die Komponente a) ein Polyamin ist, dessen wiederkehrende Struktureinheit einen Rest der Formel XXIII oder XXIV enthält, worin Z eine direkte Bindung ist, R und R' Wasserstoff oder Methyl bedeuten und $Z_3$ die in Anspruch 6 gegebene Bedeutung hat.

25. Gemisch gemäss Anspruch 2, dadurch gekennzeichnet, dass die Komponente a) ein Polyacrylat oder Polymethacrylat ist, dessen wiederkehrende Struktureinheit einen Rest der Formel XX enthält, worin $R_7$ Wasserstoff, X Sauerstoff, $p = 1$ und R und R' Wasserstoff oder Methyl sind.

26. Gemisch gemäss Anspruch 2, dadurch gekennzeichnet, dass die Komponente a) ein Copolymerisat aus einem Acrylat oder Methacrylat, das im Esterrest einen Polyalkylpiperidinrest enthält, und einem äthylenisch ungesättigten Monomeren, das keinen Piperidinrest enthält, darstellt.

27. Gemisch gemäss Anspruch 26, worin das äthylenisch ungesättigte Monomer, das keinen Piperidinrest enthält, ein Acrylat oder Methacrylat ist.

28. Gemisch gemäss Anspruch 1, dadurch gekennzeichnet, dass das Gewichtsverhältnis der Komponenten a:b = 95:5 bis 60:40 beträgt.

29. Verwendung eines Gemisches gemäss Anspruch 1 zum Stabilisieren von Kunststoffen gegen Schädigung durch Licht.

30. Verwendung gemäss Anspruch 29 zum Stabilisieren von Polyolefinen oder Styrol-Polymeren.

31. Verwendung gemäss Anspruch 29 zum Stabilisieren von Polyamiden oder Polyurethanen.

32. Verfahren zum Stabilisieren von Kunststoffen gegen Schädigung durch Licht, dadurch gekennzeichnet, dass

man 0,01 bis 5 Gew.-% eines Gemisches gemäss einem der Ansprüche 1-28 dem Kunststoff zusetzt.

33. Verfahren gemäss Anspruch 32, dadurch gekennzeichnet, dass man die Komponenten a) und b) getrennt dem Kunststoff zusetzt.

34. Gegen Lichteinwirkung stabilisierter Kunststoff, dadurch gekennzeichnet, dass er 0,01 bis 5 Gew.-% (berechnet auf den zu stabilisierenden Kunststoff) eines Stabilisatorgemisches gemäss Anspruch 1 enthält.